(19) Europäisches Patentamt
European Patent Office
Office européen des brevets

(11) EP 0 892 111 B1

(12) **FASCICULE DE BREVET EUROPEEN**

(45) Date de publication et mention de la délivrance du brevet:
**06.08.2008 Bulletin 2008/32**

(51) Int Cl.:
***D21H 19/58*** *(2006.01)*

(21) Numéro de dépôt: **98202339.2**

(22) Date de dépôt: **11.07.1998**

(54) **Suspensions aqueuses de matières minérales et leurs utilisations**

Wässrige Suspensionen von anorganischen Materialien und ihre Verwendung

Aqueous suspensions from mineral materials and their uses

(84) Etats contractants désignés:
**AT BE DE DK ES FI FR GB IT NL PT SE**
Etats d'extension désignés:
**RO SI**

(30) Priorité: **18.07.1997 FR 9709388**

(43) Date de publication de la demande:
**20.01.1999 Bulletin 1999/03**

(73) Titulaire: **Mondo Minerals Oy**
**00130 Helsinki (FI)**

(72) Inventeur: **Blum, René Vinzenz**
**4915 St Urban (CH)**

(74) Mandataire: **Richebourg, Michel François et al**
**Cabinet Michel Richebourg,**
**"Le Clos du Golf",**
**69, rue Saint-Simon**
**42000 Saint Etienne (FR)**

(56) Documents cités:
**EP-A- 0 215 565** **US-A- 3 567 503**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 0 892 111 B1

## Description

La présente invention concerne de nouvelles suspensions aqueuses de charges minérales destinées à l'industrie papetière et leurs utilisations dans la fabrication du papier ainsi que dans la fabrication de sauce de couchage du papier.

En effet ces suspensions aqueuses de charges minérales, de rhéologie permettant une facilité d'emploi, sont mises en oeuvre pendant la fabrication de la feuille de papier ou de carton en les mélangeant aux suspensions aqueuses de fibres cellulosiques afin d'améliorer l'opacité, la blancheur ou l'imprimabilité du papier obtenu.

Elles sont également mises en oeuvre, dans toutes les applications où le papier est couché, sous forme de compositions aqueuses appelées sauces de couchage, constituées essentiellement d'eau, de liants et de pigments ou charges minérales.

Ces pigments ou matières minérales, qui peuvent être de diverses origines, ont une affinité différente vis-à-vis de l'eau en fonction de leur nature.

Ainsi une première catégorie est constituée des substances minérales à surface hydrophile chargée telles que par exemple les carbonates de calcium naturels ou synthétiques, notamment les craies, les calcites ou les marbres, les dolomies ou bien encore les kaolins ainsi que le sulfate de calcium ou les oxydes de titane, le blanc satin, les hydroxydes d'aluminium ou autres.

Une deuxième comprend des charges minérales à surface hydrophobe telles que par exemple le talc, le mica ou autres.

Or ces deux types de substances minérales, qui n'ont pas le même comportement rhéologique lorsqu'elles sont mises en suspension dans l'eau notamment à forte concentration, doivent cependant disposer des mêmes critères de qualité pour l'utilisateur. Les suspensions aqueuses de substances minérales doivent ainsi présenter une limite d'écoulement suffisamment élevée pour éviter tout risque de sédimentation ainsi qu'une viscosité Brookfield suffisamment élevée mais pas trop pour permettre d'éviter toute prise en masse des particules de matières minérales rendant ainsi possible une manipulation aisée par l'utilisateur malgré un stockage pendant plusieurs jours dans des cuves sans agitation. De plus, ces suspensions doivent avoir une teneur en matière minérale la plus élevée possible afin de diminuer tous les coûts de transport inhérents à la quantité d'eau présente.

Jusqu'à aujourd'hui, les suspensions de matières minérales à surface chargée hydrophile contenaient classiquement des agents dispersants ou d'aide au broyage qui étaient des polyacrylates de bas poids moléculaire (EP 0 100 947, EP 0 542 643, EP 0 542 644).

Mais, ces agents ont le désavantage de ne pas être efficaces pour la mise en suspension et/ou le broyage des substances minérales à surface hydrophobe telles que le talc ou le mica qui sont couramment utilisées seules ou en mélange.

Ainsi l'homme du métier dispose jusqu'à aujourd'hui de suspensions de charges minérales à surface hydrophobe contenant d'autres agents dispersants et/ou d'aide au broyage qui sont des copolymères dont l'un des monomères a une structure tensioactive (EP 0 003 235, EP 215 565). Mais ces copolymères ont alors l'inconvénient de ne pas être efficaces pour la mise en suspension et/ou le broyage de matières minérales à surface hydrophile telles que les carbonates de calcium ou les kaolins, le sulfate de calcium, les oxydes de titane, le blanc satin, les hydroxydes d'aluminium ou autres.

Ainsi jusqu'à ce jour, pour disperser et/ou broyer une matière minérale à surface hydrophobe, il est extrêmement difficile pour l'Homme du métier d'utiliser un agent dispersant et/ou de broyage connu pour son efficacité dispersante et/ou d'aide au broyage de matières minérales à surface hydrophile, et vice versa.

Confrontée à ce problème d'utilisation d'agents dispersants et/ou d'aide au broyage propres à un type de matière minérale, la Demanderesse a mis au point, après de nombreuses recherches, de nouvelles suspensions de charges pigmentaires minérales qui, quelle que soit la nature de la substance minérale ont les mêmes propriétés rhéologiques et contiennent le même agent dispersant et/ou d'aide au broyage.

Ainsi, un des buts de l'invention est d'obtenir des suspensions aqueuses de matières minérales manipulables aisément par l'utilisateur et utilisables dans le domaine papetier, que ces matières minérales aient des surfaces chargées hydrophiles ou des surfaces hydrophobes.

Ce but est atteint grâce à l'utilisation comme agent dispersant et/ou d'aide au broyage d'un copolymère constitué :

a) d'au moins un monomère à insaturation éthylénique et à fonction carboxylique,

b) éventuellement d'au moins un monomère à insaturation éthylénique et à fonction sulfonique ou phosphorique ou leur mélange,

c) éventuellement d'au moins un monomère à insaturation éthylénique et sans fonction carboxylique,

d) d'au moins un monomère tensioactif oxyalkylé à insaturation éthylénique et terminé par une chaîne hydrophobe dont le radical est sélectionné en vue d'une mise en oeuvre du copolymère comme agent dispersant et/ou d'aide au broyage quel que soit le type de substances minérales à disperser et/ou broyer.

Un autre but de l'invention est l'utilisation de ces suspensions aqueuses de charges minérales selon l'invention dans la fabrication du papier, et des sauces de couchage du papier.

Les suspensions aqueuses de matières minérales, selon l'invention, et répondant aux critères de qualité précitée, se caractérisent en ce que le copolymère, agent dispersant et/ou d'aide au broyage est constitué :

a) d'au moins un monomère à insaturation éthylénique et à fonction carboxylique choisi parmi les monoacides, tels que l'acide acrylique, méthacrylique, crotonique, isocrotonique, cinnamique, les diacides, tels que l'acide itaconique, fumarique, maléique, citraconique, les anhydrides d'acides carboxyliques, tels que l'anhydride maléique et les hémiesters de diacides, tels que les monoesters en $C_1$ à $C_4$, des acides maléique ou itaconique, ou leurs mélanges,

b) éventuellement d'au moins un monomère à insaturation éthylénique et à fonction sulfonique choisi parmi l'acide acrylamido-méthyl propane sulfonique, le méthallylsulfonate de sodium, les acides vinyl sulphonique et les acides styrène sulfonique ou à fonction phosphorique choisi parmi le phosphate de méthacrylate d'ethylène glycol, le phosphate de méthacrylate de propylène glycol, le phosphate d'acrylate d'éthylène glycol, le phosphate d'acrylate de propylène glycol et leurs éthoxylats ou leurs mélanges,

c) éventuellement d'au moins un monomère à insaturation éthylénique et sans fonction carboxylique, choisi dans le groupe constitué par les esters, des acides acrylique ou méthacrylique, tels que les acrylates ou méthacrylates de méthyle, éthyle, butyle, 2-éthyl-hexyle, ou par l'acrylonitrile, le méthacrylonitrile, l'acétate de vinyle, le styrène, le méthylstyrène, le diisobutylène, la vinylpyrrolidone, la vinylcaprolactame ou encore les amides insaturés tels que l'acrylamide, le méthacrylamide, ou leurs dérivés substitués comme par exemple le diméthylaminopropyle acrylamide ou méthacrylamide, les esters acryliques ou méthacryliques de glycol, le méthacrylamido propyl-triméthyl ammonium chlorure ou sulfate, le méthacrylate de triméthyl ammonium éthyl chlorure ou sulfate, ainsi que leurs homologues en acrylate et en acrylamide quaternisés et/ou le diméthyldialylammonium chlorure,

d) d'au moins un monomère oxyalkylé à insaturation éthylénique et terminé par une chaîne hydrophobe, de formule générale (I) :

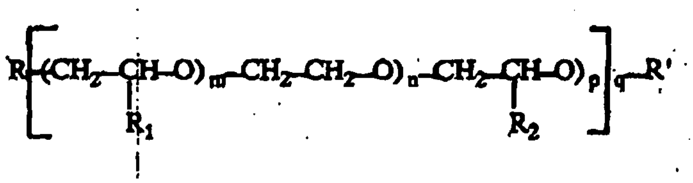

dans laquelle :

- m et p représentent un nombre de motifs d'oxyde d'alkylène inférieur ou égal à 100,
- n représente un nombre de motifs d bxyde d'éthylène inférieur ou égal à 100,
- q un nombre au moins égal à 1 et tels que :

$$0 < q(n+m+p) \leq 100$$

$R_1$ l'hydrogène ou le radical méthyle ou éthyle,

$R_2$ l'hydrogène ou le radical méthyle ou éthyle,

R représente le radical insaturé polymérisable, appartenant au groupe des esters acrylique, méthacrylique, maléique, itaconique, crotonique, vinylphtalique ainsi que les insaturés uréthanes tels que par exemple les acryluréthanne, methacryluréthanne, α-α'diméthyl-m-isopropenyl-benzyluréthanne, allyluréthanne,

R' représente le radical hydrophobe tel que le radical tristyrylphényle ou encore les groupes linéraires ou ramifiés alkyle, alkylaryle, arylalkyle, aryle ayant au moins 8 atomes de carbone ou bien des dialkyles animes ayant au moins 8 atomes de carbone lorsque R représente les insaturés uréthannes tels que par exemple les acrylucéthanne, méthacryluréthanne, α-α' diméthyl-m-isopropenyl-benzyluréthanne, allyluréthanne;

ou bien R' représente le radical hydrophobe tel que le radical tristyrylphényle ou encore les groupes linéraires ou ramifiés alkyle, alkylaryle, arylalkyle, aryle ayant plus de 30 atomes de carbone ou bien des dialkyles amines ayant au moins 22 atomes de carbone lorsque R représente le radical insaturé polymérisable, appartenant au groupe des esters acrylique, méthacrylique, maléique, itaconique, crotonique, vinylphtalique
le total des constituants (a), (b) (c) et (d) étant égal à 100
et en ce qu'il possède une viscosité spécifique au plus égale à 50 et préférentiellement au plus égale à 25.

Plus particulièrement cette suspension aqueuse de matières minérales selon l'invention contenant un copolymère comme agent dispersant et/ou d'aide au broyage se caractérise en ce que ledit copolymère est constitué :

a) de 99 % à 10 % en poids et encore plus particulièrement pour des raisons de procédé de polymérisation de 97 % à 50 % en poids d'au moins un monomère à insaturation éthylénique et à fonction carboxylique choisi parmi les monoacides, tels que l'acide acrylique, méthacrylique, crotonique, isocrotonique, cinnamique, les diacides, tels que l'acide itaconique, fumarique, maléique, citraconique, les anhydrides d'acides carboxyliques, tels que l'anhydride maléique et les hémiesters de diacides, tels que les monoesters en $C_1$ à $C_4$, des acides maléique ou itaconique, ou leurs mélanges,

b) de 0 % à 50 % d'au moins un monomère à insaturation éthylénique et à fonction sulfonique choisi parmi l'acide acrylamido-méthyl propane sulfonique, le méthallylsulfonate de sodium, les acides vinyl sulphonique et les acides styrène sulfonique ou à fonction phosphorique choisi parmi le phosphate de méthacrylate d'ethylène glycol, le phosphate de méthacrylate de propylène glycol, le phosphate d'acrylate d'éthylène glycol, le phosphate d'acrylate de propylène glycol et leurs éthoxylats ou leurs mélanges,

c) de 0 % à 50 % en poids d'au moins un monomère à insaturation éthylénique et sans fonction carboxylique, choisi dans le groupe constitué par les esters des acides acrylique ou méthacrylique, tels que les acrylates ou méthacrylates de méthyle, éthyle, butyle, 2-éthyl-hexyle, ou par l'acrylonitrile, l'acétate de vinyie, le styrène, le méthylstyrène, le diisobutylène, la vinylpyrrolidone, la vinylcaprolactame ou encore les amides insaturés tels que l'acrylamide, le méthacrylamide ou leurs dérivés substitués comme par exemple le diméthylaminopropyle acrylamide ou méthacrylamide, les esters acryliques ou méthacryliques de glycol, le méthacrylamido-propyl-triméthyl ammonium chlorure ou sulfate, le méthacrylate de triméthyl ammonium éthyl chlorure ou sulfate, ainsi que leurs homologues en acrylate et en acrylamide quaternisés et/ou le diméthyldiallylammonium chlorure,

d) de 1 % à 90 % en poids et encore plus particulièrement particulièrement pour des raisons de procédé de polymérisation de 3 % à 50 % en poids d'au moins un monomère oxyalkylé à insaturation éthylénique et terminé par une chaîne hydrophobe, de formule générale (I) :

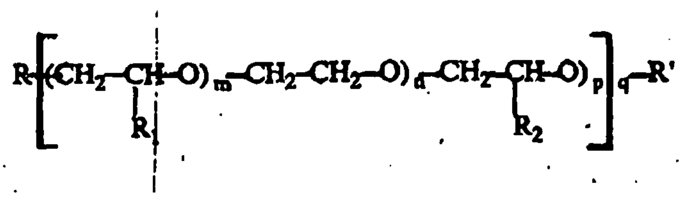

dans laquelle :

- m et p représentent un nombre de motifs d'oxyde d'alkylène inférieur ou égal à 100,
- n représente un nombre de motifs dbxyde d'éthylène inférieur ou égal à 100,
- q un nombre au moins égal à 1 et tels que :

$$0 < q(n+m+p) \leq 100$$

$R_1$ l'hydrogène ou le radical méthyle ou éthyle,

$R_2$ l'hydrogène ou le radical méthyle ou éthyle,

R représente le radical insaturé polymérisable, appartenant au groupe des esters acrylique, méthacrylique, maléique, itaconique, crotonique, vinylphtalique ainsi que les insaturés uréthannes tels que par exemple les acryluréthanne, méthacryluréthanne, $\alpha$-$\alpha$'diméthyl-m-isopropenyl- benzyluréthanne, allyluréthanne,

R' représente le radical hydrophobe tel que le radical tristyrylphényle ou encore les groupes linéaires ou ramifiés alkyle, alkylaryle, arylalkyle, aryle ayant au moins 8 atomes de carbone ou bien des dialkyles amines ayant au moins 8 atomes de carbone lorsque R représente les insaturés uréthannes tels que par exemple les acryluréthanne, méthacryluréthanne, $\alpha$-$\alpha$'dimethyl-m-isopropenyl-benzyluréthanne, allyluréthanne,

ou bien R' représente le radical hydrophobe tel que le radical tristyrylphényle ou encore les groupes linéraires ou ramifiés alkyle, alkylaryle, arylalkyle, aryle ayant plus de 30 atomes de carbone ou bien des dialkyles amines ayant au moins 22 atomes de carbone lorsque R représente le radical insaturé polymérisable, appartenant au groupe des esters acrylique, méthacrylique, maléique, itaconique, crotonique, vinylphtalique
le total des constituants (a), (b) (c) et (d) étant égal à 100
et en ce qu'il possède une viscosité spécifique au plus égale à 50 et preferentiellement au plus égale à 25.

Ce copolymère est obtenu par des procédés connus de polymérisation radicalaire en solution, en émulsion directe ou inverse, en suspension ou précipitation dans des solvants appropriés, en présence de systèmes catalytiques et d'agents de transfert connus.

Ce polymère obtenu sous forme acide et éventuellement distillé, peut être également partiellement ou totalement neutralisé par un ou plusieurs agents de neutralisation disposant d'une fonction monovalente ou d'une fonction polyvalente tels que par exemple ceux choisis dans le groupe constitué par les cations alcalins, en particulier le sodium, le potassium ou l'ammonium ou encore les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine ou bien encore ceux choisis dans le groupe constitué par les cations divalents alcalino-terreux, en particulier le magnésium et le calcium, ou encore le zinc, de même que par les cations trivalents, dont en particulier l'aluminium, ou encore, par certains cations de valence plus élevée.

Chaque agent de neutralisation intervient alors selon des taux de neutralisation propres à chaque fonction de valence.

Ce copolymère obtenu peut être utilisé sous la forme totalement acide, ou partiellement neutralisée ou totalement neutralisée.

Selon une autre variante le copolymère issu de la réaction de copolymérisation peut, éventuellement avant ou après la réaction de neutralisation totale ou partielle, être traité et séparé en plusieurs phases, selon des procédés statiques ou dynamiques connus de l'homme de l'art, par un ou plusieurs solvants polaires appartenant notamment au groupe constitué par l'eau, les alcools tels que par exemple le méthanol, l'éthanol, le propanol, l'isopropanol, les butanols, les cétones telles que notamment l'acétone, la méthyl-éthyl-cétone, la cyclohexanone ou bien encore, le tétrahydrofurane, le diméthylsulfoxyde ou leurs mélanges.

L'une des phases correspond alors au copolymère contenu dans la suspension aqueuse, de matières minérales, selon l'invention.

La viscosité spécifique du copolymère est symbolisée par la lettre «$\eta$ » et est déterminée de la manière suivante :

On prend une solution de polymérisat de façon à obtenir une solution correspondant à 2,5 g de polymère sec neutralisé à la soude et à 50 ml d'une solution d'eau bipermutée. Puis, on mesure avec un viscosimètre capillaire de constante de Baume égale à 0,000105 placé dans un bain thermostaté à 25°C le temps d'écoulement d'un volume donné de la solution précitée contenant le copolymère, ainsi que le temps d'écoulement du même volume de la solution d'eau bipermutée dépourvue dudit copolymère. Il est alors possible de définir la viscosité spécifique «$\eta$» grâce à la relation suivante :

$$«\eta» = \frac{\text{(temps d'écoulement de la solution de polymère)} - \text{(temps d'écoulement de la solution d'eau permutée)}}{\text{(temps d'écoulement de la solution d'eau permutée)}}$$

Le tube capillaire est généralement choisi de telle manière que le temps d'écoulement de la solution d'eau permutée dépourvue de copolymère, soit d'environ 90 à 100 secondes, donnant ainsi des mesures de viscosité spécifique d'une très bonne précision.

Les matières minérales mises en oeuvre dans l'invention sont d'origine très diverses et peuvent se classer en deux catégories.

La première catégorie est constituée des substances minérales à surface hydrophile chargée telles que par exemple les carbonates de calcium synthétiques ou naturels, notamment les craies, les calcites, les marbres, ou les dolomies ou bien encore les kaolins, le sulfate de calcium, les oxydes de titane ou le blanc satin ou les hydroxydes d'aluminium ou tout autre minéral à surface hydrophile.

La deuxième comprend des charges minérales à surface hydrophobe telles que par exemple le talc ou le mica ou tout autre minéral à surface hydrophobe.

Ainsi, outre le copolymère utilisé comme agent dispersant et/ou d'aide au broyage cette suspension aqueuse de matières minérales se caractérise en ce que la ou lesdites matières minérales sont choisies soit parmi les substances minérales à surface hydrophile chargée telles que les carbonates de calcium naturels ou synthétiques, notamment la craie, la calcite, le marbre, ou la dolomie ou les kaolins, le sulfate de calcium, les oxydes de titanes, ou leurs mélanges, soit choisie parmi les substances minérales à surface hydrophobe telles que notamment le talc ou le mica ou leurs mélanges, ou bien encore sont un mélange de charges minérales à surface hydrophile et de charges minérales à surface hydrophobe.

En pratique, une manière d'effectuer le délitage de la ou des substances minérales à disperser consiste à préparer sous agitation une solution aqueuse de l'agent de dispersion, selon l'invention dans laquelle est introduite la ou les substances minérales à disperser.

Selon l'invention, l'agent de dispersion est introduit à raison de 0,05 % à 5 % en poids de la fraction séchée desdits polymères par rapport à la masse sèche de la ou des substances minérales à affiner.

De même en pratique, l'opération de broyage de la ou des substances minérales à affiner consiste à broyer la ou les substances minérales avec un corps broyant en particules très fines dans un milieu aqueux contenant l'agent d'aide au broyage. On forme alors une suspension aqueuse de la ou des substances minérales à broyer.

A la suspension de la ou des substances minérales à broyer, on ajoute le corps broyant de granulométrie avantageusement comprise entre 0,20 et 4 millimètres. Le corps broyant se présente en général sous la forme de particules de matériaux aussi divers que l'oxyde de silicium, l'oxyde d'aluminium, l'oxyde de zirconium ou de leurs mélanges, ainsi que les résines synthétiques de haute dureté, les aciers, ou autres. Un exemple de composition de tels corps broyants est donné par le brevet FR 2 303 681 qui décrit des éléments broyants formés de 30 à 70 % en poids d'oxyde de zirconium, 0,1 à 5 % d'oxyde d'aluminium et de 5 à 20 % d'oxyde de silicium. Le corps broyant est de préférence ajouté à la suspension en une quantité telle que le rapport en poids entre ce matériau de broyage et la ou les substances minérales à broyer soit d'au moins 2/1, ce rapport étant de préférence compris entre les limites 3/1 et 5/1.

Le mélange de la suspension et du corps broyant est alors soumis à l'action mécanique de brassage, telle que celle qui se produit dans un broyeur classique à micro-éléments.

Selon l'invention, l'agent de dispersion et/ou d'aide au broyage est également introduit au sein du mélange formé par la suspension aqueuse de substances minérales et par le corps broyant à raison de 0,05 % à 5 % en poids de la fraction séchée desdits polymères par rapport à la masse sèche de la ou des substances minérales à affiner.

Le temps nécessaire pour aboutir à une excellente finesse de la ou des substances minérales après broyage varie selon la nature et la quantité des substances minérales à broyer, et selon le mode d'agitation utilisé et la température du milieu pendant l'opération de broyage.

Lorsque la ou les substances minérales sont une ou plusieurs matières minérales à surface hydrophile, la suspension aqueuse de matières minérales, selon l'invention, possède également une limite d'écoulement élevée ainsi qu'une viscosité Brookfield faible à des teneurs en matière sèche élevées c'est-à-dire d'au moins 45 % et préférentiellement d'au moins 60 %.

Lorsque la ou les substances minérales sont une ou plusieurs matières minérales à surface hydrophobe, la suspension aqueuse de matières minérales, selon l'invention, possède une limite d'écoulement élevée ainsi qu'une viscosité Brookfield faible à des teneurs en matière sèche élevées c'est-à-dire d'au moins 45 % et préférentiellement d'au moins 60 %.

De même, lorsque les substances minérales sont un mélange de matières minérales à surface hydrophile et de matières minérales à surface hydrophobe la suspension aqueuse de matières minérales, selon l'invention, possède une limite d'écoulement élevée ainsi qu'une viscosité Brookfield faible à des teneurs en matière sèche élevées c'est-à-dire d'au moins 45 % et préférentiellement 60 %.

Les propriétés rhéologiques précitées des suspensions aqueuses de matières minérales selon l'invention permettent leurs mises en oeuvre dans l'industrie papetière notammment comme de charge de masse du papier ou comme constituant essentiel de sauces de couchage.

Les sauces de couchage, selon l'invention sont préparées de manière connue par l'homme du métier par

mélange dans l'eau, des suspensions de charges minérales selon l'invention et d'un ou plusieurs liants d'origine naturelle ou synthétique tels que par exemple l'amidon, la carboxyméthylcellulose, les alcools polyvinyliques ou encore des latex du type styrène-butadiène ou styrène-acrylate ou encore des latex acryliques ou vinyliques ou autres.

Les sauces de couchage peuvent également contenir de manière connue des additifs usuels tels que des modificateurs de rhéologie, des charges organiques, des agents anti-mousse, des azurants optiques, des agents biocides, des lubrifiants, des hydroxydes alcalins et autres.

La portée et l'intérêt de l'invention seront mieux perçus grâce aux exemples suivants, qui ne sauraient être limitatifs et notamment quant à l'ordre d'introduction des divers constituants des suspensions.

EXEMPLE 1 :

Cet exemple concerne la préparation de suspensions aqueuses de carbonate de calcium.

A cet effet pour chacun des essais suivants, effectués à partir d'un marbre provenant du gisement de Gummern (Autriche) de granulométrie dont 90 % des particules ont un diamètre inférieur à 2 micromètres on introduit, en pluie et sous agitation dans un bécher de deux litres contenant de l'eau, une quantité dudit marbre nécessaire pour obtenir une suspension à 65 % de concentration en matière sèche. Ce bécher contient en outre une quantité de copolymère à tester correspondant à 0,5 % en poids de copolymère sec par rapport au poids total de matière sèche présente dans la suspension.

Après 20 minutes d'agitation, on mesure, à température ambiante, les viscosités Brookfield à l'aide d'un viscosimètre Brookfield type RVT à 10 tours par minute (t/min) et 100 t/min à l'aide du mobile adéquat.

Essai n° 1 :

Cet essai, illustrant l'art antérieur, met en oeuvre un polyacrylate de sodium de viscosité spécifique égale à 0,45.

Essai n° 2 :

Cet essai, illustrant l'art antérieur, met en oeuvre un mélange constitué de 25 parts en poids d'un polyacrylate de sodium de viscosité spécifique égale à 0,45 et de 75 parts en poids d'un polyoxyde d'alkylène commercialisé sous le nom de Pluronic PE 4300 par la société BASF.

Essai n° 3 :

Cet essai, illustrant l'invention, met en oeuvre un polymère neutralisé à 100 % par la soude, de viscosité spécifique égale à 4,35 et composé, en pourcentage massique, de : 90 % d'acide acrylique
10 % de méthacrylate de tristyryl phénol éthoxylé avec 25 moles d'oxyde d'éthylène.

Essai n° 4 :

Cet essai, illustrant l'invention, met en oeuvre un polymère neutralisé à 100 % par la soude, de viscosité spécifique égale à 4,38 et composé, en pourcentage massique, de : 90 % d'acide acrylique
10 % de méthacrylate de tristyryl phénol éthoxylé avec 40 moles d'oxyde d'éthylène.

Essai n° 5 :

Cet essai, illustrant l'invention, met en oeuvre un polymère neutralisé à 100 % par la soude, de viscosité spécifique égale 4,43 et composé, en pourcentage massique, de : 90 % d'acide acrylique
10 % de méthacrylate de tristyryl phénol éthoxylé avec 60 moles d'oxyde d'éthylène.

Essai n° 6 :

Cet essai, illustrant l'invention, met en oeuvre un polymère neutralisé à 100 % par la soude, de viscosité spécifique égale à 2,54 et composé, en pourcentage massique, de : 95 % d'acide acrylique
5 % de méthacryluréthanne, de formule générale (I) dans laquelle le radical hydrophobe R' est un groupe alkyle linéaire à 22 atomes de carbone, m et p sont égaux à zéro,
q = 1, et n = 25.

Essai n° 7 :

Cet essai, illustrant l'invention, met en oeuvre un polymère neutralisé à 100 % par la soude, de viscosité spécifique égale à 1,52 et composé, en pourcentage massique, de : 95 % d'acide acrylique
5 % de méthacrylate, de formule générale (I) dans laquelle le radical hydrophobe R' est un groupe -N-(R''R''') avec R" et R''' des chaînes alkyles linéaires à 12 atomes de carbone, m et p sont égaux à zéro, q = 1, et n = 50.

Essai n° 8 :

Cet essai, illustrant invention, met en oeuvre un polymère neutralisé à 100 % par la soude, de viscosité spécifique égale à 2,47 et composé, en pourcentage massique, de : 95 % d'acide acrylique
5 % de méthacryluréthanne, de formule générale (I) dans laquelle le radical hydrophobe R' est un groupe alkyle ramifié à 28 atomes de carbone, m et p sont égaux à zéro, q = 1, et n = 25.

Essai n° 9 :

Cet essai, illustrant l'invention, met en oeuvre un polymère neutralisé à 100 % par la soude, de viscosité spécifique égale à 1,79 et composé, en pourcentage massique, de : 95 % d'acide acrylique
5 % de méthacryluréthanne, de formule générale (I) dans laquelle le radical hydrophobe R' est un groupe alkyle ramifié à 30 atomes de carbone, m et p sont égaux à zéro, q = 1, et n = 25.

Essai n° 10 :

Cet essai, illustrant l'invention, met en oeuvre un polymère neutralisé à 100 % par la soude, de viscosité spécifique égale à 2,59 et composé, en pourcentage massique, de : 90 % d'acide acrylique
10 % de méthacrylate, de formule générale (I) dans laquelle le radical hydrophobe R' est un groupe alkyle ramifié à 32 atomes de carbone, m et p sont égaux à zéro, q = 1, et n = 25.

Essai n° 11 :

Cet essai, illustrant l'invention, met en oeuvre un polymère neutralisé à 100 % par la soude, de viscosité spécifique égale à 5,49 et composé, en pourcentage massique, de : 80 % d'acide acrylique
2 % d'acrylate d'éthyle
8 % d'acide méthacrylique
10 % de méthacryluréthanne, de formule générale (I) dans laquelle le radical hydrophobe R' est un radical tristyrylphényl, m et p sont égaux à zéro, q = 1, et
n=25.

Essai n° 12 :

Cet essai, illustrant l'invention, met en oeuvre un polymère neutralisé à 100 % par la soude, de viscosité spécifique égale à 3,02 et composé, en pourcentage massique, de : 97% d'acide acrylique
3 % de méthacrylate de tristyryl phénol éthoxylé avec 25 moles d'oxyde d'éthylène.

Essai n° 13 :

Cet essai, illustrant invention, met en oeuvre un polymère neutralisé à 100 % par la soude, de viscosité spécifique égale 3,94 et composé, en pourcentage massique, de : 93 % d'acide acrylique
7 % de méthacrylate de tristyryl phénol éthoxylé avec 25 moles d'oxyde d'éthylène.

Essai n° 14 :

Cet essai, illustrant l'invention, met en oeuvre un polymère neutralisé à 100 % par la soude, de viscosité spécifique égale à 3,74 et composé, en pourcentage massique, de : 85 % d'acide acrylique
15 % de méthacrylate de tristyryl phénol éthoxylé avec 25 moles d'oxyde d'éthylène

Essai n° 15 :

Cet essai, illustrant l'invention, met en oeuvre un polymère neutralisé à 100 % par la soude, de viscosité spécifique égale à 7,53 et composé, en pourcentage massique, de : 85 % d'acide acrylique
5 % d'acide méthacrylique
10 % de méthacrylate de tristyryl phénol éthoxylé avec 25 moles d'oxyde d'éthylène.

Essai n° 16 :

Cet essai, illustrant l'invention, met en oeuvre un polymère neutralisé à 100 % par la soude, de viscosité spécifique égale à 5,58 et composé, en pourcentage massique, de : 85 % d'acide acrylique
5 % d'acide itaconique
10 % de méthacrylate de tristyryl phénol éthoxylé avec 25 moles d'oxyde d'éthylène.

Essai n° 17 :

Cet essai, illustrant l'invention, met en oeuvre un polymère neutralisé à 100 % par la soude, de viscosité spécifique égale à 7,16 et composé, en pourcentage massique, de : 85 % d'acide acrylique
5 % d'acide maléique
10 % de méthacrylate de tristyryl phénol éthoxylé avec 25 moles d'oxyde d'éthylène.

Essai n° 18 :

Cet essai, illustrant l'invention, met en oeuvre un polymère neutralisé à 100 % par la soude, de viscosité spécifique égale à 6,68 et composé, en pourcentage massique, de : 85 % d'acide acrylique
5 % d'acide acrylamido-méthyl-propane-sulfonique
10 % de méthacrylate de tristyryl phénol éthoxylé avec 25 moles d'oxyde d'éthylène.

Essai n° 19 :

Cet essai, illustrant l'invention, met en oeuvre un polymère neutralisé 100 % par la soude, de viscosité spécifique égale à 4,38 et composé, en pourcentage massique, de : 85 % d'acide acrylique
5 % d'acrylamide
10 % de méthacrylate de tristyryl phénol éthoxylé avec 25 moles d'oxyde d'éthylène.

Essai n° 20 :

Cet essai, illustrant invention, met en oeuvre un polymère neutralisé à 100 % par la soude, de viscosité spécifique égale à 5,71 et composé, en pourcentage massique, de : 85 % d'acide acrylique
5 % de phosphate de méthacrylate d'éthylène glycol
10 % de méthacrylate de tristyryl phénol éthoxylé avec 25 moles d'oxyde d'éthylène.

Essai n° 21 :

Cet essai, illustrant l'invention, met en oeuvre un polymère neutralisé à 100 % par la soude, de viscosité spécifique égale à 5,49 et composé, en pourcentage massique, de : 80 % d'acide acrylique
2 % d'acrylate d'éthyle
8% d'acide méthacrylique
10 % de méthacryluréthanne, de formule générale (I) dans laquelle le radical hydrophobe R' est un radical tristyrylphényl, m et p sont égaux à zéro, q = 1, et n = 25.

Essai n° 22 :

Cet essai, illustrant l'invention, met en oeuvre un polymère neutralisé à 100 % par la soude, de viscosité spécifique égale à 0,67 et composé, en pourcentage massique, de : 95 % d'acide acrylique
5 % de méthacrylate de tristyryl phénol éthoxylé avec 25 moles d'oxyde d'éthylène.

Essai n ° 23 :

Cet essai, illustrant invention, met en oeuvre un polymère neutralisé à 100 % par la soude, de viscosité spécifique égale à 1,94 et composé, en pourcentage massique, de : 90 % d'acide acrylique
10 % de méthacrylate de tristyryl phénol éthoxylé avec 25 moles d'oxyde d'éthylène.

Essai n° 24 :

Cet essai, illustrant invention, met en oeuvre un polymère neutralisé à 100 % par la soude, de viscosité spécifique égale à 2,66 et composé, en pourcentage massique, de : 90 % d'acide acrylique
10 % de méthacrylate de tristyryl phénol éthoxylé avec 25 moles d'oxyde d'éthylène.

Essai n° 25 :

Cet essai, illustrant l'invention, met en oeuvre un polymère neutralisé à 100 % par la soude, de viscosité spécifique égale à 12,04 et composé, en pourcentage massique, de : 90 % d'acide acrylique
10 % de méthacrylate de tristyryl phénol éthoxylé avec 25 moles d'oxyde d'éthylène.

Essai n° 26

Cet essai, illustrant invention, met en oeuvre un polymère neutralisé à 70 % par la soude, de viscosité spécifique égale à 4,35 et composé, en pourcentage massique, de : 90 % d'acide acrylique
10 % de méthacrylate de tristyryl phénol éthoxylé avec 25 moles d'oxyde d'éthylène.

Tous les résultats expérimentaux sont consignés dans le tableau 1 suivant.

- TABLEAU 1-

| | Essai n° | Viscosité Brookfield de la 10 t/min | suspension en mPa.s 100 t/min |
|---|---|---|---|
| Art antérieur | 1 | 2000 | 350 |
| Art antérieur | 2 | 24000 | 6200 |
| Invention | 3 | 800 | 210 |
| Intention | 4 | 1000 | 225 |
| Invention | 5 | 1900 | 320 |
| Invention | 6 | 1280 | 270 |
| Invention | 7 | 1400 | 260 |
| Invention | 8 | 840 | 210 |
| Invention | 9 | 1040 | 230 |
| Invention | 10 | 1150 | 230 |
| Invention | 11 | 750 | 210 |
| Invention | 12 | 1250 | 270 |
| Invention | 13 | 1100 | 230 |
| Intention | 14 | 950 | 230 |
| Invention | 15 | 600 | 180 |
| Invention | 16 | 600 | 175 |
| Invention | 17 | 700 | 215 |
| Invention | 18 | 800 | 230 |
| Invention | 19 | 1100 | 290 |
| Invention | 20 | 600 | 185 |
| Invention | 21 | 750 | 210 |

(suite)

| | Essai n° | Viscosité Brookfield de la 10 t/min | suspension en mPa.s 100 t/min |
|---|---|---|---|
| Invention | 22 | 1850 | 325 |
| Invention | 23 | 1000 | 215 |
| Invention | 24 | 1100 | 290 |
| Invention | 25 | 650 | 215 |
| Invention | 26 | 190 | 110 |

La lecture du tableau 1 permet de mettre en évidence l'obtention de suspensions aqueuses de carbonate de calcium selon l'invention ayant des viscosités Brookfield faibles.

Cette lecture permet en outre de constater que l'utilisation d'un polyacrylate en association avec un polyoxyde d'alkylène, formulation couramment utilisée pour la mise en suspension de substances minérales à surface hydrophobe ne permet pas d'obtenir des suspensions de carbonate de calcium à faible viscosité Brookfield.

<u>EXEMPLE 2</u>

Cet exemple illustre l'invention et concerne la préparation d'une suspension aqueuse de carbonate de calcium à teneur en matière sèche égale à 45 %.

A cet effet pour l'essai suivant n° 27, effectué à partir d'un marbre provenant du gisement de Gummern (Autriche) de granulométrie dont 90 % des particules ont un diamètre inférieur à 2 micromètres, on introduit, en pluie et sous agitation dans un bécher de deux litres contenant de l'eau, une quantité dudit marbre nécessaire pour obtenir une suspension à 45 % de concentration en matière sèche. Ce bécher contient en outre une quantité de copolymère à tester correspondant à 0,23 % en poids de copolymère sec par rapport au poids total de matière sèche présente dans la suspension.

Le copolymère mis en oeuvre est un polymère neutralisé à 75 % par la soude, et issu d'un procédé de fractionnement, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Après 20 minutes d'agitation, on mesure, à température ambiante, les viscosités Brookfield à l'aide d'un viscosimètre Brookfield type RVT à 10 tours par minute (t/min) et 100 t/min à l'aide du mobile adéquat.

Ces viscosités sont respectivement égales à 790 mPa.s et 110 mPa.s.

<u>EXEMPLE 3</u> :

Cet exemple concerne également la préparation de suspensions aqueuses de carbonate de calcium mais de granulométrie plus grossière.

A cet effet pour chacun des essais suivants, effectués à partir d'un marbre provenant d'un gisement norvégien de granulométrie dont 60 % des particules ont un diamètre inférieur à 2 micromètres, on introduit, en pluie et sous agitation dans un bécher de deux litres contenant de l'eau, une quantité dudit marbre nécessaire pour obtenir une suspension à 75 % de concentration en matière sèche. Ce bécher contient en outre une quantité de copolymère à tester correspondant à 0,5 % en poids de copolymère sec par rapport au poids total de matière sèche présente dans la suspension.

Après 20 minutes d'agitation, on mesure, à température ambiante, les viscosités Brookfield (T0) à l'aide d'un viscosimètre Brookfield type DVII à 100 t/min à l'aide du mobile adéquat.

Ces viscosités Brookfield sont également déterminées après 24 heures, 2 jours, 3 jours et une semaine de stockage sans agitation.

La mesure de la viscosité Brookfield avant agitation (viscosité AVAG) après 7 jours de stockage ayant été effectuée, l'échantillon est agité afin de déterminer la viscosité Brookfield après agitation (viscosité APAG).

Par ailleurs ces échantillons sont dilués à 72 % et stockés pendant 7 jours sans agitation afin de regarder s'il y a sédimentation par introduction d'une spatule jusqu'au fond du flacon.

<u>Essai n° 28 :</u>

Cet essai, illustrant l'art antérieur, met en oeuvre un polyacrylate de sodium de viscosité spécifique égale à 0,45.

Essai n° 29 :

Cet essai, illustrant l'invention, met en oeuvre un polymère neutralisé à 100 % par la soude, de viscosité spécifique égale à 1,94 et composé, en pourcentage massique, de :
90 % d'acide acrylique
10 % de méthacrylate de tristyryl phénol éthoxylé avec 25 moles d'oxyde d'éthylène.

Essai n° 30 :

Cet essai, illustrant l'invention, met en oeuvre un polymère neutralisé à 100 % par la soude, de viscosité spécifique égale à 3,02 et composé, en pourcentage massique, de :
97 % d'acide acrylique
3 % de méthacrylate de tristyryl phénol éthoxylé avec 25 moles d'oxyde d'éthylène.

Essai n° 31 :

Cet essai, illustrant l'invention, met en oeuvre un polymère neutralisé à 100 % par la soude, de viscosité spécifique égale à 4,38 et composé, en pourcentage massique, de :
85 % d'acide acrylique
5 % d'acrylamide
10 % de méthacrylate de tristyryl phénol éthoxylé avec 25 moles d'oxyde d'éthylène.

Essai n° 32 :

Cet essai, illustrant l'invention, met en oeuvre un polymère neutralisé à 100 % par la soude, de viscosité spécifique égale à 5,49 et composé, en pourcentage massique, de :
80 % d'acide acrylique
2 % d'acrylate d'éthyle
8% d'acide méthacrylique
10 % de méthacryluréthanne, de formule générale (I) dans laquelle le radical hydrophobe R' est un radical tristyrylphényle, m et p sont égaux à zéro, q = 1, et n = 25.

Tous les résultats expérimentaux sont consignés dans le tableau 2 suivant.

-TABKEAU 2-

| | Essai n° | Viscosité Brookfield en mPa.s à 100 t/min | | | | | | |
|---|---|---|---|---|---|---|---|---|
| | | T0 | 24 heures AVAG | 2 jours AVAG | 3 jours AVAG | 7 jours AVAG | 7 jours APAG | Sédimentation |
| Art antérieur | 28 | 1650 | 1070 | 1200 | 1375 | 1760 | 1790 | NON |
| Invention | 29 | 268 | 431 | 451 | 450 | 508 | 301 | NON |
| Invention | 30 | 309 | 594 | 622 | 616 | 641 | 309 | NON |
| Invention | 31 | 551 | 710 | 754 | 726 | 759 | 509 | NON |
| Invention | 32 | 526 | 769 | 809 | 818 | 849 | 512 | NON |

La lecture du tableau 2 permet de mettre en évidence l'obtention de suspensions aqueuses de carbonate de calcium ayant des viscosités Brookfield faibles et stables dans le temps et ne présentant aucune tendance à sédimenter malgré la granulométrie moins fine des particules constitutives.

EXEMPLE 4 :

Cet exemple concerne la préparation de suspensions aqueuses de talc.

Dans ce but, avec le même mode opératoire à l'exception de la durée d'agitation qui est de 45 minutes et le même matériel que ceux utilisés dans l'exemple 1, on mélange du talc Finntalc C10 de la société Finnminerals avec

une quantité d'eau nécessaire pour obtenir une suspension à 65 % de concentration en matière sèche et une quantité de copolymère totalement neutralisé à tester correspondant à 2,0 % en poids sec de copolymère acide sec par rapport au poids total de matière sèche présente dans la suspension.

Essai n° 33 :

Cet essai, illustrant l'art antérieur, met en oeuvre un polyacrylate de sodium de viscosité spécifique égale à 0,45. La mise en suspension est impossible à cause du blocage de l'agitateur dû à une viscosité trop élevée.

Essai n° 34 :

Cet essai, illustrant l'art antérieur, met en oeuvre un mélange constitué de 25 parts en poids d'un polyacrylate de sodium de viscosité spécifique égale à 0,45 et de 75 parts en poids d'un polyoxyde d'alkylène commercialisé sous le nom de Pluronic PE 4300 par la société BASF.

Essai n° 35 :

Cet essai, illustrant l'invention, met en oeuvre un polymère, qui après neutralisation à 100 % par la soude, est un polymère de viscosité spécifique égale à 7,5 et composé, en pourcentage massique, de :
90 % d'acide acrylique
10 % de méthacrylate de tristyryl phénol éthoxylé avec 16 moles d'oxyde d'éthylène.

Essai n° 36 :

Cet essai, illustrant l'invention, met en oeuvre un polymère, qui après neutralisation à 100 % par la soude, est un polymère de viscosité spécifique égale à 4,0 et composé, en pourcentage massique, de :
90 % d'acide acrylique
10 % de méthacrylate de tristyryl phénol éthoxylé avec 8 moles d'oxyde d'éthylène et oxypropylé avec 13 moles d'oxyde de propylène.

Essai n° 37 :

Cet essai, illustrant l'invention, met en oeuvre un polymère, qui après neutralisation à 100 % par la soude, est un polymère de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 38 :

Cet essai, illustrant invention, met en oeuvre un polymère, qui après neutralisation à 100 % par la soude, est un polymère de viscosité spécifique égale à 4,38 et composé, en pourcentage massique, de :
90 % d'acide acrylique
10 % de méthacrylate de tristyryl phénol éthoxylé avec 40 moles d'oxyde d'éthylène.

Essai n° 39 :

Cet essai, illustrant l'invention, met en oeuvre un polymère, qui après neutralisation à 100 % par la soude, est un polymère de viscosité spécifique égale à 4,43 et composé, en pourcentage massique, de :
90 % d'acide acrylique
10 % de méthacrylate de tristyryl phénol éthoxylé avec 60 moles d'oxyde d'éthylène.

Essai n° 40 :

Cet essai, illustrant l'invention, met en oeuvre un polymère, qui après neutralisation à 100 % par la soude, est un polymère de viscosité spécifique égale à 2,59 et composé, en pourcentage massique, de :
90 % d'acide acrylique
10 % de méthacrylate, de formule générale (I) dans laquelle le radical hydrophobe R' est un groupe alkyle ramifié à 32 atomes de carbone, m et p sont égaux à zéro, q = 1, et

n=25.

Essai n° 41 :

Cet essai, illustrant l'invention, met en oeuvre un polymère, qui après neutralisation à 100 % par la soude, est un polymère de viscosité spécifique égale à 5,49 et composé, en pourcentage massique, de :
80 % d'acide acrylique
2 % d'acrylate d'éthyle
8 % d'acide méthacrylique
10 % de méthacryluréthanne, de formule générale (I) dans laquelle le radical hydrophobe R' est un radical tristyrylphényle, m et p sont égaux à zéro, q = 1, et n = 25.

Essai n° 42 :

Cet essai, illustrant l'invention, met en oeuvre un polymère, qui après neutralisation à 100 % par la soude, est un polymère de viscosité spécifique égale à 3,02 et composé, en pourcentage massique, de :
97 % d'acide acrylique
3 % de méthacrylate de tristyryl phénol éthoxylé avec 25 moles d'oxyde d'éthylène.

Essai n° 43 :

Cet essai, illustrant l'invention, met en oeuvre un polymère, qui après neutralisation à 100 % par la soude, est un polymère de viscosité spécifique égale à 3,31 et composé, en pourcentage massique, de :
95 % d'acide acrylique
5 % de méthacrylate de tristyryl phénol éthoxylé avec 25 moles d'oxyde d'éthylène.

Essai n° 44 :

Cet essai, illustrant invention, met en oeuvre un polymère, qui après neutralisation à 100 % par la soude, est un polymère de viscosité spécifique égale à 3,94 et composé, en pourcentage massique, de :
93 % d'acide acrylique
7 % de méthacrylate de tristyryl phénol éthoxylé avec 25 moles d'oxyde d'éthylène.

Essai n° 45 :

Cet essai, illustrant Invention, met en oeuvre un polymère, qui après neutralisation à 100 % par la soude, est un polymère de viscosité spécifique égale à 3,74 et composé, en pourcentage massique, de :
85 % d'acide acrylique
15 % de méthacrylate de tristyryl phénol éthoxylé 25 moles d'oxyde d'éthylène.

Essai n° 46 :

Cet essai, illustrant l'invention, met en oeuvre un polymère, qui après neutralisation à 100 % par la soude, est un polymère de viscosité spécifique égale à 7,53 et composé, en pourcentage massique, de :
85 % d'acide acrylique
5 % d'acide méthacrylique
10 % de méthacrylate de tristyryl phénol éthoxylé avec 25 moles d'oxyde d'éthylène.

Essai n° 47 :

Cet essai, illustrant invention, met en oeuvre un polymère, qui après neutralisation à 100 % par la soude, est un polymère de viscosité spécifique égale à 5,58 et composé, en pourcentage massique, de :
85 % d'acide acrylique
5 % d'acide itaconique
10 % de méthacrylate de tristyryl phénol éthoxylé avec 25 moles d'oxyde d'éthylène.

Essai n° 48 :

Cet essai, illustrant l'invention, met en oeuvre un polymère, qui après neutralisation à 100 % par la soude, est un polymère de viscosité spécifique égale à 7,16 et composé, en pourcentage massique, de :
85 % d'acide acrylique
5 % d'acide maléique
10 % de méthacrylate de tristyryl phénol éthoxylé avec 25 moles d'oxyde d'éthylène.

Essai n° 49 :

Cet essai, illustrant l'invention, met en oeuvre un polymère, qui après neutralisation à 100 % par la soude, est un polymère de viscosité spécifique égale à 6,68 et composé, en pourcentage massique, de :
85 % d'acide acrylique
5% d'acide acrylamido-méthyl-propane-sulfonique
10 % de méthacrylate de tristyryl phénol éthoxylé avec 25 moles d'oxyde d'éthylène.

Essai n° 50 :

Cet essai, illustrant l'invention, met en oeuvre un polymère, qui après neutralisation à 100 % par la soude, est un polymère de viscosité spécifique égale à 4,38 et composé, en pourcentage massique, de :
85 % d'acide acrylique
5 % d'acrylamide
10 % de méthacrylate de tristyryl phénol éthoxylé avec 25 moles d'oxyde d'éthylène.

Essai n° 51 :

Cet essai, illustrant invention, met en oeuvre un polymère, qui après neutralisation à 100 % par la soude, est un polymère de viscosité spécifique égale à 5,71 et composé, en pourcentage massique, de :
85 % d'acide acrylique
5 % de phosphate de méthacrylate d'éthylène glycol
10 % de méthacrylate de tristyryl phénol éthoxylé avec 25 moles d'oxyde d'éthylène.

Essai n° 52 :

Cet essai, illustrant invention, met en oeuvre un polymère, qui après neutralisation à 100 % par la soude, est un polymère de viscosité spécifique égale à 5,49 et composé, en pourcentage massique, de :
80 % d'acide acrylique
2 % d'acrylate d'éthyle
8 % d'acide méthacrylique
10 % de méthacryluréthanne, de formule générale (I) dans laquelle le radical hydrophobe R' est un radical tristyrylphényle, m et p sont égaux à zéro, q = 1, et n = 25.

Essai n° 53 :

Cet essai, illustrant l'invention, met en oeuvre un polymère, qui après neutralisation à 100 % par la soude, est un polymère de viscosité spécifique égale à 1,94 et composé, en pourcentage massique, de :
90 % d'acide acrylique
10 % de méthacrylate de tristyryl phénol éthoxylé avec 25 moles d'oxyde d'éthylène.

Essai n° 54 :

Cet essai, illustrant l'invention, met en oeuvre un polymère, qui après neutralisation à 100 % par la soude, est un polymère de viscosité spécifique égale à 2,66 et composé, en pourcentage massique, de :
90 % d'acide acrylique
10 % de méthacrylate de tristyryl phénol éthoxylé avec 25 moles d'oxyde d'éthylène.

Essai n° 55 :

Cet essai, illustrant l'invention, met en oeuvre un polymère, qui après neutralisation à 100 % par la soude, est un polymère de viscosité spécifique égale à 3,38 et composé, en pourcentage massique, de :
90 % d'acide acrylique
10 % de méthacrylate de tristyryl phénol éthoxylé avec 25 moles d'oxyde d'éthylène.

Essai n° 56 :

Cet essai, illustrant l'invention, met en oeuvre un polymère, qui après neutralisation à 100 % par la soude, est un polymère de viscosité spécifique égale à 12,04 et composé, en pourcentage massique, de :
90 % d'acide acrylique
10 % de méthacrylate de tristyryl phénol éthoxylé avec 25 moles d'oxyde d'éthylène.

Essai n° 57 :

Cet essai, illustrant l'invention, met en oeuvre un polymère neutralisé, en pourcentage molaire, à 75 % par la soude et 25 % par la chaux, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 58 :

Cet essai, illustrant l'invention, met en oeuvre un polymère neutralisé à 50 % par la soude et 50 % par la chaux, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 59 :

Cet essai, illustrant l'invention, met en oeuvre un polymère neutralisé, en pourcentage molaire, à 25 % par la soude et 75 % par la chaux, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 60 :

Cet essai, illustrant l'invention, met en oeuvre un polymère neutralisé, en pourcentage molaire, à 75 % par la soude et 25 % par l'hydroxyde de magnésium, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 61 :

Cet essai, illustrant l'invention, met en oeuvre un polymère neutralisé à 100 % par la potasse, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 62 :

Cet essai, illustrant invention, met en oeuvre un polymère neutralisé à 100 % par l'ammoniaque de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Tous les résultats expérimentaux sont consignés dans les tableaux 3.1. et 3.2. suivants.

- TABLEAU 3.1. -

| | Essai n° | Viscosité Brookfield en mPa.s | |
|---|---|---|---|
| | | 10 t/min | 100t/min |
| Art antérieur | 33 | Impossible | Impossible |
| Art antérieur | 34 | 700 | 270 |
| Invention | 35 | 2840 | 1290 |
| Invention | 36 | 800 | 950 |
| Invention | 37 | 840 | 560 |
| Invention | 38 | 1160 | 800 |
| Invention | 39 | 540 | 730 |
| Invention | 40 | 440 | 515 |
| Invention | 41 | 1360 | 1000 |
| Invention | 42 | 280 | 260 |
| Invention | 43 | 200 | 185 |
| Invention | 44 | 320 | 290 |
| Invention | 45 | 880 | 510 |
| Invention | 46 | 1280 | 570 |
| Invention | 47 | 1050 | 550 |
| Invention | 48 | 1600 | 635 |
| Invention | 49 | 1480 | 640 |
| Invention | 50 | 400 | 260 |
| Invention | 51 | 1400 | 630 |

TABLEAU 3.2. -

| | Essai n° | Viscosité Brookfield en mPa.s | |
|---|---|---|---|
| | | 10 t/min | 100 t/min |
| Invention | 52 | 1360 | 1000 |
| Invention | 53 | 400 | 460 |
| Invention | 54 | 460 | 470 |
| Invention | 55 | 840 | 600 |
| Invention | 56 | 2160 | 830 |
| Invention | 57 | 350 | 170 |
| Invention | 58 | 680 | 390 |
| Invention | 59 | 480 | 350 |
| Invention | 60 | 720 | 380 |
| Invention | 61 | 1450 | 710 |
| Invention | 62 | 700 | 390 |

La lecture des tableaux 3.1. et 3.2. permet de mettre en évidence l'obtention de suspensions aqueuses de talc selon l'invention ayant des viscosités Brookfield faibles à haute concentration en matière sèche.

Cette lecture permet en outre de constater que l'utilisation d'un polyacrylate couramment utilisé pour la mise en suspension de substances minérales à surface hydrophile ne permet pas d'obtenir des suspensions de talc à faible viscosité Brookfield.

EXEMPLE 5 :

Cet exemple concerne comme dans l'exemple précédent la préparation de suspensions aqueuses de talc, mais contenant une quantité différente de copolymère.
Dans ce but, avec le même mode opératoire et le même matériel que ceux utilisés dans l'exemple précédent, on mélange du talc Finntalc C10 de la société Finnminerals avec une quantité d'eau nécessaire pour obtenir une suspension à 65 % de concentration en matière sèche et une quantité de copolymère à tester correspondant à 1,0 % en poids sec de copolymère acide sec par rapport au poids total de matière sèche présente dans la suspension.

Essai n° 63 :

Cet essai, illustrant l'art antérieur, met en oeuvre un polyacrylate de sodium de viscosité spécifique égale à 0,45. La mise en suspension est impossible à cause du blocage de l'agitateur dû à une viscosité trop élevée.

Essai n° 64 :

Cet essai, illustrant l'invention, met en oeuvre un polymère, qui après neutralisation à 100 % par la soude, est un polymère de viscosité spécifique égale à 24 et composé, en pourcentage massique, de :
85 % d'acide acrylique
15 % de méthacrylate de tristyryl phénol éthoxylé avec 25 moles d'oxyde d'éthylène.

Essai n° 65 :

Cet essai, illustrant l'invention, met en oeuvre un polymère, qui après neutralisation à 100 % par la soude, est un polymère de viscosité spécifique égale à 19 et composé, en pourcentage massique, de :
80 % d'acide acrylique
20 % de méthacrylate de tristyryl phénol éthoxylé avec 25 moles d'oxyde d'éthylène et oxypropylé avec 13 moles d'oxyde de propylène.

Essai n° 66 :

Cet essai, illustrant l'invention, met en oeuvre un polymère composé, en pourcentage massique, de :
70 % d'acide acrylique
30 % de méthacrylate de tristyryl phénol éthoxylé avec 25 moles d'oxyde d'éthylène.

Essai n° 67 :

Cet essai, illustrant l'invention, met en oeuvre un polymère composé, en pourcentage massique, de :
60 % d'acide acrylique
40 % de méthacrylate de tristyryl phénol éthoxylé avec 25 moles d'oxyde d'éthylène.

Essai n° 68 :

Cet essai, illustrant l'invention, met en oeuvre un polymère, qui après neutralisation à 100 % par la soude, est un polymère de viscosité spécifique égale à 4,47 et composé, en pourcentage massique, de :
50 % d'acide acrylique
10 % de méthacrylate de tristyryl phénol éthoxylé avec 25 moles d'oxyde d'éthylène
40 % d'acide acrylamido-2-méthyl-2-propane sulfonique.

Essai n° 69 :

Cet essai, illustrant l'invention, met en oeuvre un polymère, qui après neutralisation à 100 % par la soude, est un polymère de viscosité spécifique égale à 3,0 et composé, en pourcentage massique, de :
50 % d'acide acrylique

10 % de méthacrylate de tristyryl phénol éthoxylé avec 25 moles d'oxyde d'éthylène
40 % de phosphate de méthacrylate d'éthylène glycol

Essai n° 70 :

Cet essai, illustrant l'invention, met en oeuvre un polymère, qui après neutralisation à 100 % par la soude, est un polymère de viscosité spécifique égale à 3,67 composé, en pourcentage massique, de :
40 % d'acide acrylique
10 % de méthacrylate de tristyryl phénol éthoxylé avec 25 moles d'oxyde d'éthylène
50 % d'acrylamide

Tous les résultats expérimentaux sont consignés dans le tableau 4 suivant :

TABLEAU4

| | Essai n° | Viscosité Brookfield en mPa.s | |
|---|---|---|---|
| | | 10 t/min | 100t/min |
| Art antérieur | 63 | Impossible | Impossible |
| Invention | 64 | 1000 | 305 |
| Invention | 65 | 500 | 180 |
| Invention | 66 | 1080 | 280 |
| Invention | 67 | 780 | 220 |
| Invention | 68 | 280 | 200 |
| Invention | 69 | 200 | 160 |
| Invention | 70 | 165 | 175 |

La lecture du tableau 4 permet de mettre en évidence l'obtention de suspensions aqueuses de talc selon l'invention ayant des viscosités Brookfield faibles à haute concentration en matière sèche.

Cette lecture permet en outre de constater que l'utilisation d'un polyacrylate couramment utilisé pour la mise en suspension de substances minérales à surface hydrophile ne permet pas d'obtenir des suspensions de talc à faible viscosité Brookfield.

EXEMPLE 6 :

Cet exemple concerne la préparation de suspensions aqueuses de mica.

Dans ce but, avec le même mode opératoire et le même matériel que ceux utilisés dans l'exemple 1, on mélange du mica commercialisé sous le nom de Ascoat 30 par la société Jungbunzlauer GmbH avec une quantité d'eau nécessaire pour obtenir une suspension à 68 % de concentration en matière sèche et une quantité de copolymère à tester correspondant à 0,6 % en poids sec de copolymère sec par rapport au poids total de matière sèche présente dans la suspension.

Essai n° 71 :

Cet essai, illustrant l'art antérieur, met en oeuvre un copolymère neutralisé à 100 % par la soude, de viscosité spécifique 4,7 et composé en pourcentage massique de 90 % d'acide acrylique et 10 % de méthacrylate d'alcool laurique éthoxylé avec 23 moles d'oxyde d'éthylène.

Essai n° 72 :

Cet essai, illustrant l'art antérieur, met en oeuvre un copolymère neutralisé à 100 % par la soude, de viscosité spécifique égale à 4,66 et composé en pourcentage massique de 90 % d'acide acrylique et 10 % de méthacrylate de nonyl phénol éthoxylé avec 30 moles d'oxyde d'éthylène.

Essai n° 73 :

Cet essai, illustrant l'invention, met en oeuvre un polymère neutralisé à 100 % par la soude, de viscosité

spécifique égale à 4,0 et composé, en pourcentage massique, de :
90 % d'acide acrylique
10 % de méthacrylate de tristyryl phénol éthoxylé avec 8 moles d'oxyde d'éthylène et oxypropylé avec 13 moles d'oxyde de propylène.

Essai n° 74 :

Cet essai, illustrant l'invention, met en oeuvre un polymère neutralisé à 100 % par la soude, de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.

Essai n° 75 :

Cet essai, illustrant l'invention, met en oeuvre un polymère neutralisé à 100 % par la soude, de viscosité spécifique égale à 4,38 et composé, en pourcentage massique, de :
90 % d'acide acrylique
10 % de méthacrylate de tristyryl phénol éthoxylé avec 40 moles d'oxyde d'éthylène.

Essai n° 76 :

Cet essai, illustrant l'invention, met en oeuvre un polymère neutralisé à 100 % par la soude, de viscosité spécifique égale à 4,43 et composé, en pourcentage massique, de :
90 % d'acide acrylique
10 % de méthacrylate de tristyryl phénol éthoxylé avec 60 moles d'oxyde d'éthylène.

Essai n° 77 :

Cet essai, illustrant l'invention, met en oeuvre un polymère neutralisé à 100 % par la soude, de viscosité spécifique égale à 2,54 et composé, en pourcentage massique, de :
95 % d'acide acrylique
5 % de méthacryluréthanne, de formule générale (I) dans laquelle le radical hydrophobe R' est un groupe alkyle linéaire à 22 atomes de carbone, m et p sont égaux à zéro, q = 1, et n = 25.

Essai n° 78 :

Cet essai, illustrant invention, met en oeuvre un polymère neutralisé à 100 % par la soude, de viscosité spécifique égale à 1,52 et composé, en pourcentage massique, de :
95 % d'acide acrylique
5 % de méthacrylate, de formule générale (I) dans laquelle le radical hydrophobe R' est un groupe -N-(R''R''') avec R'' et R''' des chaînes alkyles linéaires à 12 atomes de carbone, m et p sont égaux à zéro, q = 2 et n = 25.

Essai n° 79 :

Cet essai, illustrant l'invention, met en oeuvre un polymère neutralisé à 100 % par la soude, de viscosité spécifique égale à 2,47 et composé, en pourcentage massique, de :
95 % d'acide acrylique
5 % de méthacryluréthanne, de formule générale (I) dans laquelle le radical hydrophobe R' est un groupe alkyle ramifié à 28 atomes de carbone, m et p sont égaux à zéro,q=1 et n=25.

Essai n° 80 :

Cet essai, illustrant l'invention, met en oeuvre un polymère neutralisé à 100 % par la soude, de viscosité spécifique égale à 1,79 et composé, en pourcentage massique, de :
95 % d'acide acrylique
5 % de méthacryluréthanne, de formule générale (I) dans laquelle le radical hydrophobe R' est un groupe alkyle ramifié à 30 atomes de carbone, m et p sont égaux à zéro, q = 1 et n = 25.

Essai n° 81 :

Cet essai, illustrant invention, met en oeuvre un polymère neutralisé à 100 % par la soude, de viscosité spécifique égale à 2,59 et composé, en pourcentage massique, de :
90 % d'acide acrylique
10 % de méthacrylate, de formule générale (I) dans laquelle le radical hydrophobe R' est un groupe alkyle ramifié à 32 atomes de carbone, m et p sont égaux à zéro, q = 1 et n=25.

Essai n° 82 :

Cet essai, illustrant l'invention, met en oeuvre un polymère neutralisé à 100 % par la soude, de viscosité spécifique égale à 3,02 et composé, en pourcentage massique, de :
97 % d'acide acrylique
3 % de méthacrylate de tristyryl phénol éthoxylé avec 25 moles d'oxyde d'éthylène.

Essai n° 83 :

Cet essai, illustrant invention, met en oeuvre un polymère neutralisé à 100 % par la soude, de viscosité spécifique égale à 3,94 et composé, en pourcentage massique, de :
93 % d'acide acrylique
7 % de méthacrylate de tristyryl phénol éthoxylé avec 25 moles d'oxyde d'éthylène.

Essai n° 84 :

Cet essai, illustrant l'invention, met en oeuvre un polymère neutralisé à 100 % par la soude, de viscosité spécifique égale à 3,74 et composé, en pourcentage massique, de :
85 % d'acide acrylique
15 % de méthacrylate de tristyryl phénol éthoxylé avec 25 moles d'oxyde d'éthylène.

Essai n° 85 :

Cet essai, illustrant l'invention, met en oeuvre un polymère neutralisé à 100 % par la soude, de viscosité spécifique égale à 4,38 et composé, en pourcentage massique, de :
85 % d'acide acrylique
5% d'acrylamide
10 % de méthacrylate de tristyryl phénol éthoxylé avec 25 moles d'oxyde d'éthylène.

Essai n° 86 :

Cet essai, illustrant l'invention, met en oeuvre un polymère neutralisé à 100 % par la soude, de viscosité spécifique égale à 0,67 et composé, en pourcentage massique, de :
95 % d'acide acrylique
5 % de méthacrylate de tristyryl phénol éthoxylé avec 25 moles d'oxyde d'éthylène.

Essai n° 87 :

Cet essai, illustrant l'invention, met en oeuvre un polymère neutralisé à 100 % par la soude, de viscosité spécifique égale à 1,94 et composé, en pourcentage massique, de :
90 % d'acide acrylique
10 % de méthacrylate de tristyryl phénol éthoxylé avec 25 moles d'oxyde d'éthylène.

Essai n° 88 :

Cet essai, illustrant l'invention, met en oeuvre un polymère neutralisé à 100 % par la soude, de viscosité spécifique égale à 2,66 et composé, en pourcentage massique, de :
90 % d'acide acrylique
10 % de méthacrylate de tristyryl phénol éthoxylé avec 25 moles d'oxyde d'éthylène.

Tous les résultats expérimentaux sont consignés dans le tableau 5 suivant.

TABLEAU 5

| | Essai n° | Viscosité Brookfield en mPa.s | |
|---|---|---|---|
| | | 10 t/mir | 100t/min |
| Art antérieur | 71 | 5200 | 1800 |
| Art antérieur | 72 | 5200 | 1600 |
| Invention | 73 | 1500 | 560 |
| Invention | 74 | 2550 | 940 |
| Invention | 75 | 3400 | 1300 |
| Invention | 76 | 2500 | 440 |
| Invention | 77 | 1250 | 770 |
| Invention | 78 | 1400 | 500 |
| Invention | 79 | 1100 | 440 |
| Invention | 80 | 1000 | 400 |
| Invention | 81 | 800 | 420 |
| Invention | 82 | 2800 | 1000 |
| Invention | 83 | 2000 | 1300 |
| Invention | 84 | 1000 | 440 |
| Invention | 85 | 1700 | 720 |
| Invention | 86 | 1550 | 670 |
| Invention | 87 | 1400 | 740 |
| Invention | 88 | 2300 | 1030 |

La lecture du tableau 5 permet de mettre en évidence l'obtention de suspensions aqueuses de mica selon l'invention ayant des viscosités Brookfield faibles à haute concentration en matière sèche.
Cette lecture permet en outre de constater que l'utilisation de copolymère de l'art antérieur ne permet pas d'obtenir des suspensions aqueuses de mica à faible viscosité Brookfield.

EXEMPLE 7 :

Cet exemple concerne la préparation de suspensions aqueuses de kaolin.
Dans ce but, avec le même mode opératoire et le même matériel que ceux utilisés dans l'exemple 1, on mélange du kaolin commercialisé sous le nom de SPS par la société ECC avec, une quantité d'eau nécessaire pour obtenir une suspension à 66 % de concentration en matière sèche et une quantité de copolymère à tester correspondant à 0,52 % en poids sec de copolymère acide sec par rapport au poids total de matière sèche présente dans la suspension.

Essai n° 89 :

Cet essai, illustrant l'art antérieur, met en oeuvre un polyacrylate de sodium de viscosité spécifique égale à 0,45.

Essai n° 90 :

Cet essai, illustrant l'invention, met en oeuvre un polymère, qui après neutralisation à 100 % par la soude, est un polymère de viscosité spécifique égale à 0,40 et composé, en pourcentage massique, de :
95 % d'acide acrylique
5 % de méthacrylate de tristyryl phénol éthoxylé avec 25 moles d'oxyde d'éthylène.

Essai n° 91:

Cet essai, illustrant l'invention, met en oeuvre un polymère, qui après neutralisation à 100 % par la soude, est un polymère de viscosité spécifique égale à 0,42 et composé, en pourcentage massique, de :
95 % d'acide acrylique
5 % de méthacrylate, de formule générale (I) dans laquelle le radical hydrophobe R' est un groupe alkyle ramifié à 32 atomes de carbone, m et p sont égaux à zéro, q = 1 et n = 25.
Tous les résultats expérimentaux sont consignés dans le tableau 6 suivant.

TABLEAU 6

| | Essai n° | Viscosité Brookfield en mPa.s | |
|---|---|---|---|
| | | 10 T/min | 100 T/min |
| Art antérieur | 89 | 4000 | 850 |
| Invention | 90 | 3720 | 840 |
| Invention | 91 | 3700 | 710 |

La lecture du tableau 6 permet de mettre en évidence l'obtention de suspensions aqueuses de kaolin selon l'invention ayant des viscosités Brookfield faibles à haute concentration en matière sèche.

EXEMPLE 8 :

Cet exemple concerne la préparation de suspensions aqueuses de mélanges de matières minérales qu'elles soient à surface hydrophile ou à surface hydrophobe.

Essai n° 92 :

Cet essai illustre l'invention et consiste à préparer en parallèle une suspension aqueuse de carbonate de calcium et une suspension aqueuse de kaolin, puis à procéder au mélange équipondéral en matière sèche des deux suspensions aqueuses obtenues.
A cet effet, on prépare, à partir d'un marbre provenant d'un gisement norvégien de granulométrie dont 60 % des particules ont un diamètre inférieur à 2 micromètres, une suspension aqueuse de carbonate de calcium, en introduisant, en pluie et sous agitation dans un bécher de deux litres contenant de l'eau, une quantité dudit marbre nécessaire pour obtenir une suspension à 70 % de concentration en matière sèche. Ce bécher contient en outre une quantité de copolymère à tester correspondant à 0,5 % en poids de copolymère sec par rapport au poids total de matière sèche présente dans la suspension.
Le copolymère mis en oeuvre dans cet essai après neutralisation à 100 % par la soude, est un polymère de viscosité spécifique égale à 4,35 et composé, en pourcentage massique, de :
90 % d'acide acrylique
10 % de méthacrylate de tristyryl phénol éthoxylé avec 25 moles d'oxyde d'éthylène.
De la même manière et avec le même matériel on prépare, en même temps, une suspension aqueuse de kaolin (commercialisé sous le nom SPS par la société ECC) ayant une concentration en matière sèche de 63% et une teneur en copolymère à tester égale à 0,5 % en poids sec acide par rapport au poids total de matière sèche présente dans la suspension.
Après 20 minutes d'agitation de ces deux suspensions, on les mélange en versant, dans un bécher, 714,3 grammes de l'une et 793,7 grammes de l'autre de manière à obtenir une suspension aqueuse à 50 % en poids sec de carbonate de calcium et à 50 % en poids sec de kaolin.
Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1900 mPa.s.
Ainsi, la suspension aqueuse obtenue, selon l'invention, est une suspension mixte (50 % / 50 % en poids sec) de carbonate de calcium et de kaolin facilement manipulable à forte concentration en matière sèche (66,3 %).

Essai n° 93 :

Cet essai illustre l'invention et consiste à préparer en parallèle une suspension aqueuse de carbonate de

calcium et une suspension aqueuse de kaolin, puis à procéder au mélange pour obtenir une suspension à 70 % en poids sec de carbonate de calcium et 30 % en poids sec de kaolin.

A cet effet, on prépare, à partir d'un marbre provenant d'un gisement norvégien de granulométrie dont 60 % des particules ont un diamètre inférieur à 2 micromètres, une suspension aqueuse de carbonate de calcium, en introduisant, en pluie et sous agitation dans un bécher de deux litres contenant de l'eau, une quantité dudit marbre nécessaire pour obtenir une suspension à 70 % de concentration en matière sèche. Ce bécher contient en outre une quantité de copolymère à tester correspondant à 0,5 % en poids de copolymère acide sec par rapport au poids total de matière sèche présente dans la suspension.

Le copolymère mis en oeuvre dans cet essai est un polymère, qui après neutralisation à 100 % par la soude, est un polymère, de viscosité spécifique égale à 4,35 et composé, en pourcentage massique, de :

90 % d'acide acrylique

10 % de méthacrylate de tristyryl phénol éthoxylé avec 25 moles d'oxyde d'éthylène

De la même manière et avec le même matériel on prépare, en même temps, une suspension aqueuse de kaolin (commercialisé sous le nom SPS par la société ECC) ayant une concentration en matière sèche de 63% et une teneur en copolymère à tester égale à 0,5 % en poids sec acide par rapport au poids total de matière sèche présente dans la suspension.

Après 20 minutes d'agitation de ces deux suspensions, on les mélange en versant, dans un bécher, 1000 grammes de l'une et 476,2 grammes de l'autre de manière à obtenir une suspension aqueuse à 70 % en poids sec de carbonate de calcium et à 30 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1100 mPa.s.

Ainsi, la suspension aqueuse obtenue, selon l'invention, est une suspension mixte (70 % / 30 % en poids sec) de carbonate de calcium et de kaolin facilement manipulable à forte concentration en matière sèche (67,7 %).

<u>Essai n° 94 :</u>

Cet essai illustre l'invention et consiste à préparer en parallèle une suspension aqueuse de kaolin et une suspension aqueuse de mica, puis à procéder au mélange pour obtenir une suspension à 50 % en poids sec de kaolin et 50 % en poids sec de mica.

A cet effet, on prépare la suspension aqueuse de kaolin en introduisant, en pluie et sous agitation, dans un bécher de deux litres équipé d'un agitateur Pendraulik et contenant de l'eau, une quantité de kaolin (commercialisé sous le nom de SPS par la société ECC) nécessaire pour obtenir une suspension à 65,1 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère qui, après neutralisation à 100 % par la soude, est un polymère de viscosité spécifique égale à 2,54 et composé, en pourcentage massique, de :

95 % d'acide acrylique

5 % de méthacryluréthanne, de formule générale (I) dans laquelle le radical hydrophobe R' est un groupe alkyle linéaire à 22 atomes de carbone, m et p sont égaux à zéro, q = 1 et n = 25.

De la même manière et avec le même matériel on prépare, en même temps, une suspension aqueuse de mica (commercialisé sous le nom Ascoat 30 par la société Jungbunzlauer GmbH) ayant une concentration en matière sèche de 67,4 % et une teneur en copolymère à tester égale à 0,6 % en poids sec par rapport au poids total de matière sèche présente dans la suspension.

Après 20 minutes d'agitation de ces deux suspensions, on les mélange en versant, dans un bécher, 760 grammes de l'une et 742 grammes de l'autre de manière à obtenir une suspension aqueuse à 50 % en poids sec de kaolin et 50 % en poids sec de mica.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 732 mPa.s.

Ainsi, la suspension aqueuse obtenue, selon invention, est une suspension mixte (50 % / 50 % en poids sec) de kaolin et de mica facilement manipulable à forte concentration en matière sèche (66,2 %).

<u>Essai n° 95 :</u>

Cet essai illustre invention et consiste à préparer en parallèle une suspension aqueuse de kaolin et une suspension aqueuse de mica, puis à procéder au mélange pour obtenir une suspension à 75 % en poids sec de kaolin et 25 % en poids sec de mica.

A cet effet, on prépare la suspension aqueuse de kaolin en introduisant, en pluie et sous agitation, dans un bécher de deux litres équipé d'un agitateur Pendraulik et contenant de l'eau, une quantité de kaolin (commercialisé sous le nom de SPS par la société ECC) nécessaire pour obtenir une suspension à 65,1 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 2,54 et composé, en pourcentage massique, de :
95 % d'acide acrylique
5 % de méthacryluréthanne, de formule générale (I) dans laquelle le radical hydrophobe R' est un groupe alkyle linéaire à 22 atomes de carbone, m et p sont égaux à zéro, q = 1 et n = 25.

De la même manière et avec le même matériel on prépare, en même temps, une suspension aqueuse de mica (commercialisé sous le nom Ascoat 30 par la société Jungbunzlauer GmbH) ayant une concentration en matière sèche de 67,4 % et une teneur en copolymère à tester égale à 0,6 % en poids sec par rapport au poids total de matière sèche présente dans la suspension.

Après 20 minutes d'agitation de ces deux suspensions, on les mélange en versant, dans un bécher, 1152 grammes de l'une et 371 grammes de l'autre de manière à obtenir une suspension aqueuse à 75 % en poids sec de kaolin et 25 % en poids sec de mica.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1380 mPa.s.

Ainsi, la suspension aqueuse obtenue, selon l'invention, est une suspension mixte (75 % / 25 % en poids sec) de kaolin et de mica facilement manipulable à forte concentration en matière sèche (65,6 %).

<u>Essai n° 96 :</u>

Cet essai illustre l'invention et consiste à préparer en parallèle une suspension aqueuse de talc et une suspension aqueuse de kaolin, puis à procéder au mélange pour obtenir une suspension à 75 % en poids sec de talc et 25 % en poids sec de kaolin.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc $C_{10}$ par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère qui, après neutralisation à 100 % par la soude, est un polymère de viscosité spécifique égale à 4,38 et composé, en pourcentage massique, de :
85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPESWHITE par la société ECC) ayant une concentration en matière sèche de 65,1 % et une teneur en copolymère à tester égale à 1,0 % en poids sec acide par rapport au poids total de matière sèche présente dans la suspension.

Après 20 minutes d'agitation de ces deux suspensions, on les mélange en versant, dans un bécher, 1155,6 grammes de l'une et 384 grammes de l'autre de manière à obtenir une suspension aqueuse à 75 % en poids sec de talc et 25 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1230 mPa.s.

Ainsi, la suspension aqueuse obtenue, selon l'invention, est une suspension mixte (75 % / 25 % en poids sec) de talc et de kaolin facilement manipulable à forte concentration en matière sèche (65,0 %).

<u>Essai n° 97 :</u>

Cet essai illustre l'invention et consiste à préparer en parallèle une suspension aqueuse de talc et une suspension aqueuse de kaolin, puis à procéder au mélange pour obtenir une suspension à 50 % en poids sec de talc et 50 % en poids sec de kaolin.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom

de Finntalc $C_{10}$ par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère qui, après neutralisation à 100 % par la soude, est un polymère de viscosité spécifique égale à 4,38 et composé, en pourcentage massique, de :
85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPESWHITE par la société ECC) ayant une concentration en matière sèche de 65,1 % et une teneur en copolymère à tester égale à 1,0 % en poids sec acide par rapport au poids total de matière sèche présente dans la suspension.

Après 20 minutes d'agitation de ces deux suspensions, on les mélange en versant, dans un bécher, 770,5 grammes de l'une et 768 grammes de l'autre de manière à obtenir une suspension aqueuse à 50 % en poids sec de talc et 50 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 2380 mPa.s.

Ainsi, la suspension aqueuse obtenue, selon l'invention, est une suspension mixte (50 % / 50 % en poids) de talc et de kaolin facilement manipulable à forte concentration en matière sèche (65,0 %).

<u>Essai n° 98 :</u>

Cet essai illustre l'invention et consiste à préparer en parallèle une suspension aqueuse de talc et une suspension aqueuse de kaolin, puis à procéder au mélange pour obtenir une suspension à 25 % en poids sec de talc et 75 % en poids sec de kaolin.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère, qui après neutralisation à 100 % par la soude, est un polymère de viscosité spécifique égale à 4,38 et composé, en pourcentage massique, de :
85 % d'acide acrylique
5% d'acrylamide
10 % de méthacrylate de tristyryl phénol éthoxylé avec 25 moles d'oxyde d'éthylène.

De la même manière et avec le même matériel on prépare, en même temps, une suspension aqueuse de kaolin (commercialisé sous le nom SPESWHITE par la société ECC) ayant une concentration en matière sèche de 65,1 % et une teneur en copolymère à tester égale à 1 % en poids sec acide par rapport au poids total de matière sèche présente dans la suspension.

Après 20 minutes d'agitation de ces deux suspensions, on les mélange en versant, dans un bécher, 385,2 grammes de l'une et 1152 grammes de l'autre de manière à obtenir une suspension aqueuse à 25 % en poids sec de talc et 75 % en poids sec de kaolin.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 1860 mPa.s.

Ainsi, la suspension aqueuse obtenue, selon l'invention, est une suspension mixte (25 % / 75 % en poids sec) de talc et de kaolin manipulable à forte concentration en matière sèche (65,0 %).

<u>Essai n° 99 :</u>

Cet essai illustre l'art antérieur et consiste à préparer en parallèle une suspension aqueuse de talc et une suspension aqueuse de carbonate de calcium, puis à procéder au mélange pour obtenir une suspension à 75 % en poids sec de talc et 25 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc C10 par la société Finnminerals) nécessaire pour obtenir une suspension à 64,9 % de concentration en matière sèche. Ce bécher contient en outre une quantité de polyacrylate de sodium de viscosité spécifique égale à 0,48

à tester, correspondant à 0,15 % en poids de copolymère sec par rapport au poids total de matière sèche présente dans la suspension et une quantité d'un polyoxyde d'alkylène (commercialisé sous le nom de Pluronic PE 4300 par la société BASF) correspondant à 1,4 % en poids sec par rapport au poids total de matière sèche présente dans la suspension ainsi qu'une quantité de soude correspondant à 0,08 % en poids par rapport au poids sec de matière sèche présente dans la suspension.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en polyacrylate de sodium égale à 0,5 % en poids sec par rapport au poids total de matière sèche présente dans la suspension.

Après 20 minutes d'agitation de ces deux suspensions, on les mélange en versant, dans un bécher, 1155,5 grammes de l'une et 384,6 grammes de l'autre de manière à obtenir une suspension aqueuse à 75 % en poids sec de talc et 25 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 150 mPa.s.

Ainsi, la suspension aqueuse obtenue est une suspension mixte (75 % / 25 % en poids sec) de talc et de carbonate de calcium facilement manipulable à forte concentration en matière sèche (65,0 %) mais nécessitant l'utilisation de deux formules dispersantes différentes, l'une pour la charge minérale hydrophile, l'autre pour la charge minérale hydrophobe.

<u>Essai n° 100 :</u>

Cet essai illustre l'invention et consiste à préparer en parallèle une suspension aqueuse de talc et une suspension aqueuse de carbonate de calcium, puis à procéder au mélange pour obtenir une suspension à 75 % en poids sec de talc et 25 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc $C_{10}$ par la société Finnminerals) nécessaire pour obtenir une suspension à 64,9 % de concentration en matière sèche. Ce bécher contient en outre une quantité de copolymère à tester correspondant à 1,0 % en poids de copolymère acide sec par rapport au poids total de matière sèche présente dans la suspension.

Le copolymère mis en oeuvre dans cet essai est un polymère qui, après neutralisation à 100 % par la soude, est un polymère de viscosité spécifique égale à 4,38 et composé, en pourcentage massique, de :
85 % d'acide acrylique
5 % d'acrylamide
10 % de méthacrylate de tristyryl phénol éthoxylé avec 25 moles d'oxyde d'éthylène.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en copolymère à tester égale à 1,0 % en poids sec par rapport au poids total de matière sèche présente dans la suspension.

Après 20 minutes d'agitation de ces deux suspensions, on les mélange en versant, dans un bécher, 1155,5 grammes de l'une et 384,6 grammes de l'autre de manière à obtenir une suspension aqueuse à 75 % en poids sec de talc et 25 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 150 mPa.s.

Ainsi, la suspension aqueuse obtenue, selon invention, est une suspension mixte (75 % / 25 % en poids sec) de talc et de carbonate de calcium facilement manipulable à forte concentration en matière sèche (65,0 %) ceci à l'aide de l'utilisation d'un seul dispersant.

<u>Essai n° 101 :</u>

Cet essai illustre l'art antérieur et consiste à préparer directement une suspension aqueuse de talc et une suspension aqueuse de carbonate de calcium, puis à procéder au mélange pour obtenir une suspension à 50 % en poids sec de talc et 50 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc $C_{10}$ par la société Finnminerals) nécessaire pour obtenir une suspension à 64,9 % de concentration en

matière sèche. Ce bécher contient en outre une quantité de polyacrylate de sodium de viscosité spécifique égale à 0,48 à tester, correspondant à 0,15 % en poids de copolymère sec par rapport au poids total de matière sèche présente dans la suspension et une quantité d'un polyoxyde d'alkylène (commercialisé sous le nom de Pluronic PE 4300 par la société BASF) correspondant à 1,4 % en poids sec par rapport au poids total de matière sèche présente dans la suspension ainsi qu'une quantité de soude correspondant à 0,08 % en poids par rapport au poids sec de matière sèche présente dans la suspension.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en copolymère à tester égale à 0,5 % en poids sec par rapport au poids total de matière sèche présente dans la suspension.

Après 20 minutes d'agitation de ces deux suspensions, on les mélange en versant, dans un bécher, 770,4 grammes de l'une et 769,2 grammes de l'autre de manière à obtenir une suspension aqueuse à 50 % en poids sec de talc et 50 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 350 mPa.s pour une concentration en matière sèche de 65,0 %.

Il est à noter que l'essai a nécessité l'utilisation de deux formules dispersantes différentes, l'une pour la charge minérale hydrophile, l'autre pour la charge minérale hydrophobe.

Essai n° 102 :

Cet essai, illustre l'invention et consiste à préparer en parallèle une suspension aqueuse de talc et une suspension aqueuse de carbonate de calcium, puis à procéder au mélange pour obtenir une suspension à 50 % en poids sec de talc et 50 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc $C_{10}$ par la société Finnminerals) nécessaire pour obtenir une suspension à 64,9 % de concentration en matière sèche. Ce bécher contient en outre une quantité de polyacrylate de sodium de viscosité spécifique égale à 0,48 à tester, correspondant à 1,0 % en poids de copolymère acide sec par rapport au poids total de matière sèche présente dans la suspension.

Le copolymère mis en oeuvre dans cet essai est un polymère qui, après neutralisation à 100 % par la soude, est un polymère de viscosité spécifique égale à 4,38 et composé, en pourcentage massique, de :

85 % d'acide acrylique

5 % d'acrylamide

10 % de méthacrylate de tristyryl phénol éthoxylé avec 25 moles d'oxyde d'éthylène.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en copolymère à tester égale à 1 % en poids sec acide par rapport au poids total de matière sèche présente dans la suspension.

Après 20 minutes d'agitation de ces deux suspensions, on les mélange en versant, dans un bécher, 770,4 grammes de l'une et 769,2 grammes de l'autre de manière à obtenir une suspension aqueuse à 50 % en poids sec de talc et 50 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 350 mPa.s.

Ainsi, la suspension aqueuse obtenue, selon l'invention, est une suspension mixte (50% / 50% en poids sec) de talc et de carbonate de calcium facilement manipulable à forte concentration en matière sèche (65 %), ceci à l'aide de l'utilisation d'un seul dispersant.

Essai n° 103 :

Cet essai, illustre l'art antérieur et consiste à préparer en parallèle une suspension aqueuse de talc et une suspension aqueuse de carbonate de calcium, puis à procéder au mélange pour obtenir une suspension à 25 % en poids sec de talc et 75 % en poids sec de carbonate de calcium

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc $C_{10}$ par la société Finnminerals) nécessaire pour obtenir une suspension à 64,9 % de concentration en

matière sèche. Ce bécher contient en outre une quantité de polyacrylate de sodium de viscosité spécifique égale à 0,48 à tester, correspondant à 0,15 % en poids de copolymère sec par rapport au poids total de matière sèche présente dans la suspension et une quantité d'un polyoxyde d'alkylène (commercialisé sous le nom de Pluronic PE 4300 par la société BASF) correspondant à 1,4 % en poids sec par rapport au poids total de matière sèche présente dans la suspension ainsi qu'une quantité de soude correspondant à 0,08 % en poids sec de matière sèche présente dans la suspension.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en copolymère à tester égale à 0,5 % en poids sec par rapport au poids total de matière sèche présente dans la suspension.

Après 20 minutes d'agitation de ces deux suspensions, on les mélange en versant, dans un bécher, 385,2 grammes de l'une et 1153,8 grammes de l'autre de manière à obtenir une suspension aqueuse à 25 % en poids sec de talc et 75 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 465 mPa.s pour une concentration en matière sèche de 65,0 %.

Il est à noter que l'essai a nécessité l'utilisation de deux formules dispersantes différentes, l'une pour la charge minérale hydrophile, l'autre pour la charge minérale hydrophobe.

<u>Essai n° 104 :</u>

Cet essai, illustre l'invention et consiste à préparer en parallèle une suspension aqueuse de talc et une suspension aqueuse de carbonate de calcium, puis à procéder au mélange pour obtenir une suspension à 25 % en poids sec de talc et 75 % en poids sec de carbonate de calcium.

A cet effet, on prépare la suspension aqueuse de talc en introduisant, en pluie et sous agitation, dans un bécher de deux litres équipé d'un agitateur Pendraulik et contenant de l'eau, une quantité de talc (commercialisé sous le nom de Finntalc $C_{10}$ par la société Finnminerals) nécessaire pour obtenir une suspension à 64,9 % de concentration en matière sèche et une quantité de copolymère à tester correspondant à 1,0 % en poids de copolymère acide sec par rapport au poids total de matière sèche présente dans la suspension

Le copolymère mis en oeuvre dans cet essai est un polymère qui, après neutralisation à 100 % par la soude, est un polymère de viscosité spécifique égale à 4,38 et composé, en pourcentage massique, de :

85 % d'acide acrylique

5 % d'acrylamide

10 % de méthacrylate de tristyryl phénol éthoxylé avec 25 moles d'oxyde d'éthylène.

De la même manière et avec le même matériel on prépare, en même temps, à partir d'un marbre provenant d'un gisement norvégien, de granulométrie dont 75 % des particules ont un diamètre inférieur à 1 micromètre, une suspension aqueuse de carbonate de calcium ayant une concentration en matière sèche de 65 % et une teneur en copolymère à tester égale à 1 % en poids sec acide par rapport au poids total de matière sèche présente dans la suspension.

Après 20 minutes d'agitation de ces deux suspensions, on les mélange en versant, dans un bécher, 385,2 grammes de l'une et 1153,8 grammes de l'autre de manière à obtenir une suspension aqueuse à 25 % en poids sec de talc et 75 % en poids sec de carbonate de calcium.

Après 10 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 220 mPa.s.

Ainsi, la suspension aqueuse obtenue, selon l'invention, est une suspension mixte (25 % / 75 % en poids sec) de talc et de carbonate de calcium et de talc facilement manipulable à forte concentration en matière sèche (65,0 %), ceci à l'aide de l'utilisation d'un seul dispersant.

<u>Essai n° 105 :</u>

Cet essai, illustre l'invention et consiste à préparer directeemnt une suspension aqueuse mixte 50 % en poids sec de carbonate de calcium et 50 % en poids sec de talc.

A cet effet, on prépare, à partir d'un marbre provenant d'un gisement norvégien de granulométrie dont 60 % des particules ont un diamètre inférieur à 2 micromètres et à partir du talc (commercialisé sous le nom de Finntalc $C_{10}$ par la société Finnminerals, une suspension aqueuse mixte de carbonate de calcium et de talc en introduisant, en pluie et sous agitation dans un bécher de deux litres contenant de l'eau, une même quantité dudit marbre et dudit talc nécessaire pour obtenir une suspension à 65 % de concentration en matière sèche. Ce bécher contient en outre une quantité de copolymère à tester correspondant à 2,0 % en poids de copolymère acide sec par rapport au poids total de

matière sèche présente dans la suspension

Le copolymère mis en oeuvre dans cet essai est un polymère qui, après neutralisation à 100 % par la soude, est un polymère de viscosité spécifique égale à 4,35 et composé, en pourcentage massique, de :

90 % d'acide acrylique

5 % d'acrylamide

10 % de méthacrylate de tristyryl phénol éthoxylé avec 25 moles d'oxyde d'éthylène.

Après 20 minutes d'agitation du mélange, on mesure, à température ambiante, la viscosité Brookfield (To) à l'aide d'un viscosimètre Brookfield type DVII à 100 t/min à l'aide du mobile adéquat. La viscosité Brookfield mesurée est 350 mPa.s.

Ainsi, la suspension aqueuse obtenue, selon invention, est une suspension mixte (50 % / 50 % en poids sec) de carbonate de calcium et de talc facilement manipulable à forte concentration en matière sèche (65,0).

<u>EXEMPLE 9 :</u>

Cet exemple concerne la préparation d'une suspension de carbonate de calcium grossier soumise à un broyage pour l'affiner en une suspension microparticulaire. Dans ce but, une suspension de carbonate de -calcium grossier a été préparée à partir d'un carbonate de calcium naturel commercialisé sous le nom BL 200 par la société OMYA S.A., en mettant en oeuvre les divers agents d'aide au broyage à tester :

<u>Essai n° 106 :</u>

Cet essai, illustrant l'invention, met en oeuvre un polymère neutralisé à 100 % par la soude, de viscosité spécifique égale à 0,67 et composé, en pourcentage massique, de :

95 % d'acide acrylique

5 % de méthacrylate, de formule générale (I) dans laquelle le radical hydrophobe R' est un groupe alkyle ramifié à 32 atomes de carbone, m et p sont égaux à zéro, q = 1 et n=25.

<u>Essai n° 107 :</u>

Cet essai, illustrant l'invention, met en oeuvre un polymère neutralisé à 100 % par la soude, de viscosité spécifique égale à 4,6 et composé, en pourcentage massique, de :

90 % d'acide acrylique

10 % de méthacrylate de tristyrylphénol éthoxylé avec 25 moles d'oxyde d'éthylène.

Pour chaque essai, on a préparé une suspension aqueuse de carbonate de calcium provenant du gisement d'Orgon (France), ayant une granulométrie telle que 19 % des particules ont un diamètre inférieur à 2 micromètres.

La suspension aqueuse a une concentration en matière sèche de 76 % en poids par rapport à la masse totale.

L'agent d'aide au broyage est introduit dans cette suspension selon les quantités indiquées dans le tableau ci-après exprimées en pour cent en poids sec par rapport à la masse de carbonate de calcium sec à broyer.

La suspension circule dans un broyeur du type Dyno-Mill à cylindre fixe et impulseur tournant, dont le corps broyant est constitué par des billes de corindon de diamètre compris dans l'intervalle 0,6 millimètres à 1,0 millimètre.

Le volume total occupé par le corps broyant est de 1 150 centimètres cubes tandis que sa masse est de 2 900 g. La chambre de broyage a un volume de 1 400 centimètres cubes.

La vitesse circonférentielle du broyeur est de 10 mètres par seconde.

La suspension de carbonate de calcium est recyclée à raison de 18 litres par heure.

La sortie du broyeur Dyno-Mill est munie d'un séparateur de mailles 200 micromètres permettant de séparer la suspension résultant du broyage et le corps broyant.

La température lors de chaque essai de broyage est maintenue à 60°C environ.

A la fin du broyage (T0), on récupère dans un flacon un échantillon de la suspension pigmentaire affinée et on mesure la viscosité à l'aide d'un viscosimètre Brookfield type RVT, à une température de 20°C et une vitesse de rotation de 10 tours par minute et 100 tours par minute avec le mobile adéquat.

La granulométrie est déterminée par la mesure à l'aide d'un Sédigraph 5100 de la société Micromeritics.

Tous les résultats expérimentaux sont consignés dans le tableau 7 suivant.

TABLEAU 7

| | Essai n° | Agent d'aide au broyage utilisé | | Granulométrie % < 1 μm | Viscosité Brookfield en mPa.s 10 t/min 100 t/min |
|---|---|---|---|---|---|
| | | Viscosité spécifique | Consommation % sec/sec | | |
| Invention | 106 | 0,67 | 1,27 | 31 | 8100 1250 |
| Invention | 107 | 4,6 | 1,1 | 45 | 8500 2040 |

La lecture du tableau 7 permet de constater l'obtention de suspensions aqueuses de carbonate de calcium affinées à haute concentration en matière sèche.

EXEMPLE 10 :

Cet exemple concerne la préparation d'une suspension aqueuse de mica grossier (commercialisé par la société Junbunzlauer GmbH sous le nom ASCOAT 30, de granulométrie dont 18 % des particules ont un diamètre inférieur à un micromètre) soumise à un broyage pour l'affiner en une suspension microparticulaire.

Essai n° 108:

Cet essai, illustrant l'invention, met en oeuvre, avec le même matériel et le même mode opératoire que ceux de l'exemple 9 à l'exception de la matière sèche de la suspension qui est égale à 65 %, un polymère neutralisé à 100 % par la soude, de viscosité spécifique égale à 1,85 et composé, en pourcentage massique, de :
95 % d'acide acrylique
5 % de méthacrylate, de formule générale (I) dans laquelle le radical hydrophobe R' est un groupe alkyle ramifié à 32 atomes de carbone, m et p sont égaux à zéro, q = 1 et
n = 25.

Les résultats obtenus figurent dans le tableau 8 suivant :

TABLEAU 8

| | Essai n° | Agent d'aide au broyage utilisé | | Granulométrie %< 1 μm | Viscosité Brookfield en mPa.s 10 t/min 100 t/min |
|---|---|---|---|---|---|
| | | Viscosité spécifique | Consommation % sec/sec | | |
| Invention | 108 | 1,85 | 0,70 | 36,1 | 25000 4100 |

La lecture du tableau 8 permet de constater l'obtention de suspensions aqueuses de mica affinées à haute concentration en matière sèche, ce qui est impossible par la mise en oeuvre d'un agent de l'art antérieur.

EXEMPLE 11 :

Cet exemple concerne la mesure du comportement rhéologique de suspensions aqueuses de carbonate de calcium préparées selon le mode opératoire de l'exemple 1.

Après les 20 minutes d'agitation, on mesure, à température ambiante, le comportement rhéologique de la suspension ainsi préparée au moyen d'un viscoélasticimètre Stress Tech® de la société Reologica Instruments AB (Suède) équipé de cylindres coaxiaux CC25.

Le mode opératoire pour la mesure du comportement rhéologique de la suspension est identique pour chacun des essais, à savoir pour chaque essai, on injecte dans le cylindre du viscoélasticimètre un échantillon de la suspension préparée par la mise en oeuvre du polymère à tester et on lui applique un précisaillement de 10 Pa pendant 12 secondes puis après 180 secondes d'attente correspondant au temps d'équilibre, on lui applique un cisaillement progressant linéairement de 0,025 Pa à 2,5 Pa en 100 secondes et 40 intervalles.

La limite d'écoulement, correspondant au cisaillement à appliquer à la suspension pour rompre les liaisons internes et obtenir une suspension dont la viscosité diminue, est déterminée par la valeur maximale de la courbe viscosité en Pa.s en fonction du cisaillement en Pa.

Essai n° 109 :

Cet essai, illustrant l'art antérieur, met en oeuvre une suspension aqueuse de l'essai n° 1.

Essai n° 110 :

Cet essai, illustrant l'invention met en oeuvre la suspension aqueuse de l'essai n° 8.

Essai n° 111 :

Cet essai, illustrant l'invention met en oeuvre la suspension aqueuse de l'essai n° 9.

Essai n° 112 :

Cet essai, illustrant invention, met en oeuvre une suspension aqueuse contenant un polymère neutralisé à 100 % par la soude, de viscosité spécifique égale à 1,83 et composé de :
90 % d'acide acrylique
10 % de méthacrylate, de formule générale (I) dans laquelle le radical hydrophobe R' est un groupe alkyle ramifié à 32 atomes de carbone, m et p sont égaux à zéro, q = 1 et n =25.

Essai n° 113 :

Cet essai, illustrant l'invention, met en oeuvre une suspension aqueuse contenant un polymère neutralisé à 100 % par la soude, de viscosité spécifique égale à 1,80 et composé de :
90 % d'acide acrylique
10 % de méthacrylate, de formule générale (I) dans laquelle le radical hydrophobe R' est un groupe alkyle ramifié à 32 atomes de carbone, m et p sont égaux à zéro, q = 2 et n =25.

Essai n° 114 :

Cet essai, illustrant l'invention, met en oeuvre la suspension aqueuse de l'essai n° 6.
Tous les résultats expérimentaux sont consignés dans le tableau 9 suivant.

TABLEAU 9

| | Essai n° | Viscosité en Pas | Limite d'écoulement en Pa |
|---|---|---|---|
| Art antérieur | 109 | 362,8 | 0,4603 |
| Invention | 110 | 40,9 | 0,8459 |
| Invention | 111 | 94,6 | 1,1450 |
| Invention | 112 | 118,5 | 0,7363 |
| Invention | 113 | 124,8 | 0,6744 |
| Invention | 114 | 129 | 0,8600 |

La lecture du tableau 9 permet de constater que les suspensions aqueuses de carbonate de calcium selon l'invention possèdent une limite d'écoulement plus élevée que celle de l'art antérieur, caractéristique de suspensions présentant une bonne stabilité.

EXEMPLE 12 :

Cet exemple concerne la mesure du comportement rhéologique de suspensions aqueuses de talc préparées selon le mode opératoire de l'exemple 4.
Pour tous les essais suivants, le mode opératoire et le matériel utilisés pour cette mesure sont identiques à ceux mis en oeuvre dans l'exemple 11.

Essai n° 115 :

Cet essai illustrant l'art antérieur met en oeuvre la suspension aqueuse de l'essai n° 34.

Essai n° 116 :

Cet essai illustrant l'invention met en oeuvre la suspension aqueuse de l'essai n° 37.
Tous les résultats expérimentaux sont consignés dans le tableau 10 suivant.

TABLEAU 10

| | Essai n° | Viscosité en Pas | Limite d'écoulement en Pa |
|---|---|---|---|
| Art antérieur | 115 | 22,9 | 0,1180 |
| Invention | 116 | 14,7 | 0,3035 |

La lecture du tableau 10 permet de constater que les suspensions aqueuses de talc selon invention possèdent une limite d'écoulement plus élevée que celle de l'art antérieur, caractéristique de suspensions présentant une bonne stabilité.

EXEMPLE 13 :

Cet exemple concerne la mesure du comportement rhéologique de suspensions aqueuses de talc préparées selon le mode opératoire de l'exemple 5.
Après les 45 minutes d'agitation, on mesure, à 25°C, le comportement rhéologique des suspensions ainsi préparées au moyen d'un viscoélasticimètre Stress Tech® de la société Reologica Instruments AB (Suède) équipé de cylindres coaxiaux CC25.
Le mode opératoire pour la mesure du comportement rhéologique des suspensions est identique pour chacun des essais, à savoir pour chaque essai, on injecte dans le cylindre du viscoélasticimètre un échantillon de la suspension préparée par la mise en oeuvre du polymère à tester et on lui applique un précisaillement de 15 Pa pendant 12 secondes puis après 600 secondes d'attente correspondant au temps d'équilibre, on lui applique un cisaillement progressant linéairement de 0,1 Pa à 2,5 Pa en 100 secondes et 60 intervalles.
La limite d'écoulement, correspondant au cisaillement à appliquer à la suspension pour rompre les liaisons internes et obtenir une suspension dont la viscosité diminue, est déterminée par la valeur maximale de la courbe viscosité en Pa.s en fonction du cisaillement en Pa.

Essai n° 117 :

Cet essai, illustrant l'art antérieur, met en oeuvre une suspension aqueuse de talc obtenue en utilisant 1,0 % en poids sec d'un mélange constitué de 25 parts en poids d'un polyacrylate de sodium de viscosité spécifique égale à 0,45 et de 75 parts en poids d'un polyoxyde d'alkylène commercialisé sous le nom de Pluronic PE 4300 par la société BASF.

Essai n° 118 :

Cet essai, illustrant l'invention met en oeuvre la suspension aqueuse de l'essai n°66.

Essai n° 119 :

Cet essai, illustrant l'invention met en oeuvre la suspension aqueuse de l'essai n°67.

Essai n° 120 :

Cet essai, illustrant l'invention met en oeuvre la suspension aqueuse de l'essai n°68.

Essai n° 121 :

Cet essai, illustrant l'invention met en oeuvre la suspension aqueuse de l'essai n°69.

Essai n° 122 :

Cet essai, illustrant l'invention met en oeuvre la suspension aqueuse de l'essai n°70.

Tous les résultats expérimentaux sont consignés dans le tableau 11 suivant :

TABLEAU 11

| | Essai n° | Viscosité en Pa.s | Limite d'écoulement en Pa |
|---|---|---|---|
| Art antérieur | 117 | 2,0 | < 0,1600 |
| Invention | 118 | 17,3 | 0,4001 |
| Invention | 119 | 10,6 | 0,2403 |
| Invention | 120 | 9,58 | 0,1603 |
| Invention | 121 | 3,68 | 0,1603 |
| Invention | 122 | 2,44 | 0,2002 |

La lecture du tableau 11 permet de constater que les suspensions aqueuses de talc selon l'invention possèdent une limite d'écoulement plus élevée que celle de l'art antérieur caractéristique de suspensions présentant une bonne stabilité.

EXEMPLE 14 :

Cet exemple concerne la mesure du comportement rhéologique de suspensions aqueuses de mica préparées selon le mode opératoire de l'exemple 6.
Pour tous les essais suivants, le mode opératoire et le matériel utilisés pour cette mesure sont identiques à ceux mis en oeuvre dans l'exemple 11.

Essai n° 123 :

Cet essai, illustrant l'art antérieur, met en oeuvre une suspension aqueuse contenant un polyacrylate de sodium de viscosité spécifique égale à 0,45.

Essai n° 124 :

Cet essai, illustrant l'invention, met en oeuvre une suspension aqueuse contenant un polymère neutralisé à 100 % par la soude, de viscosité spécifique égale à 1,83 et composé de :
90 % d'acide acrylique
10 % de méthacrylate, de formule générale (I) dans laquelle le radical hydrophobe R' est un groupe alkyle ramifié à 32 atomes de carbone, m et p sont égaux à zéro, q = 1 et n=50.

Essai n° 125 :

Cet essai, illustrant l'invention, met en oeuvre une suspension aqueuse de l'essai n° 82.

Essai n° 126 :

Cet essai, illustrant l'invention, met en oeuvre une suspension aqueuse contenant un polymère neutralisé à 100 % par la soude, de viscosité spécifique égale à 5,49 et composé de :
80 % d'acide acrylique
2 % d'acrylate d'éthyle
10 % d'acide méthacrylique
10 % de méthacryluréthanne, de formule générale (I) dans laquelle le radical hydrophobe R' est un radical tristyrylphényl, m et p sont égaux à zéro, q = 1 et n = 25.

Tous les résultats expérimentaux sont consignés dans le tableau 12 suivant.

TABLEAU 12

| | Essai n° | Viscosité en Pas | Limite d'écoulement en Pa |
|---|---|---|---|
| Art antérieur | 123 | 15,5 | 0,1368 |
| Invention | 124 | 50,5 | 0,4758 |
| Invention | 125 | 28,4 | 0,6913 |
| Invention | 126 | 43,6 | 1,046 |

La lecture du tableau 12 permet de constater que les suspensions aqueuses de mica selon invention possèdent une limite d'écoulement plus élevée que celle de l'art antérieur, caractéristique de suspensions présentant une bonne stabilité.

EXEMPLE 15 :

Cet exemple concerne la mesure du comportement rhéologique de suspensions aqueuses de talc et de carbonate de calcium préparées selon le mode opératoire de l'exemple 8.

Pour tous les essais suivants, le mode opératoire et le matériel utilisés pour cette mesure sont identiques à ceux mis en oeuvre dans l'exemple 11.

Essai n° 127 :

Cet essai, illustrant l'art antérieur, met en oeuvre une suspension aqueuse de l'essai n° 99.

Essai n°128 :

Cet essai, illustrant l'invention, met en oeuvre une suspension aqueuse de l'essai n° 100.

Essai n° 129 :

Cet essai, illustrant l'art antérieur, met en oeuvre une suspension aqueuse de l'essai n° 101.

Essai n° 130 :

Cet essai, illustrant l'invention, met en oeuvre une suspension aqueuse de l'essai n° 102.

Essai n° 131 :

Cet essai, illustrant l'art antérieur, met en oeuvre une suspension aqueuse de l'essai n° 103.

Essai n° 132 :

Cet essai, illustrant l'invention, met en oeuvre une suspension aqueuse de l'essai n° 104.

Tous les résultats expérimentaux sont consignés dans le tableau 13 suivant :

TABLEAU 13

| | Essai n° | Viscosité en Pas | Limite d'écoulement en Pa |
|---|---|---|---|
| Art antérieur | 127 | 68,7 | 0,304 |
| Invention | 128 | 139 | 1,083 |
| Art antérieur | 129 | 736 | 0,948 |
| Invention | 130 | 14200 | 3,994 |
| Art antérieur | 131 | 5790 | 1,912 |
| Invention | 132 | 5190 | 2,9480 |

La lecture du tableau 13 permet de constater que les suspensions aqueuses de talc et de carbonate de calcium selon l'invention possèdent respectivement une limite d'écoulement plus élevée que celle de l'art antérieur, caractéristique de suspensions présentant une bonne stabilité.

EXEMPLE 16 :

Cet exemple concerne l'utilisation des suspensions aqueuses de charges minérales selon l'invention dans la fabrication de sauce de couchage du papier.
Dans ce but, on prépare les sauces de couchage en mélangeant dans l'eau, les suspensions aqueuses de charges minérales à tester avec les autres constituants de la sauce de couchage dont la composition en poids est :

100 parts de suspension aqueuse à tester à 65 % en matière sèche
12 parts d'un latex styrène-butadiène carboxylé commercialisé sous le nom DL 905 par la société Dow Chemical
0,5 parts de carboxyméthylcellulose commercialisé sous le nom de Finnfix 5 par la société Metsa Serla
la teneur en matière sèche est de l'ordre de 64,5 % et le pH égal à 8,4.

Les sauces de couchage ainsi préparées sont alors soumises aux mesures de viscosité Brookfield à température ambiante et à 20 tours/minute, 50 tours par minute et 100 tours par minute au moyen d'un viscosimètre Brookfield type DVII équipé du mobile adéquat.

Essai n° 133 :

Cet essai, illustrant l'art antérieur, met en oeuvre une suspension aqueuse de talc selon l'essai n° 34.

Essai n° 134 :

Cet essai, illustrant l'invention, met en oeuvre une suspension aqueuse de talc selon l'essai n° 37.
Tous les résultats expérimentaux sont consignés dans le tableau 14 suivant.

TABLEAU 14

| | Essai n° | Viscosité Brookfield en mPa.s | | |
|---|---|---|---|---|
| | | 20 t/min | 50 t/min | 100 t/min |
| Art antérieur | 133 | 4860 | 2892 | 2160 |
| Invention | 134 | 1420 | 920 | 877 |

La lecture du tableau 14 permet de voir que la sauce de couchage selon l'invention est plus fluide que celle selon l'art antérieur.

## Revendications

1. Suspension aqueuse de matières minérales contenant un copolymère comme agent dispersant et/ou d'aide au broyage de matières minérales en suspension aqueuse **caractérisée en ce que** le dit copolymère est constitué :

a) d'au moins un monomère à insaturation éthylénique et à fonction carboxylique choisi parmi les monoacides, tels que l'acide acrylique, méthacrylique, crotonique, isocrotonique, cinnamique, les diacides, tels que l'acide itaconique, fumarique, maléique, citraconique, les anhydrides d'acides carboxyliques, tels que l'anhydride maléique et les hémiesters de diacides, tels que les monoesters en $C_1$ à $C_4$, des acides maléique ou itaconique,
b) éventuellement d'au moins un monomère à insaturation éthylénique et à fonction sulfonique choisi parmi l'acide acrylamido-méthyl-propane-sulfonique, le méthallylsulfonate de sodium, les acides vinyl sulphonique et les acides styrène sulfonique ou à fonction phosphorique choisi parmi le phosphate de méthacrylate d'ethylène glycol, le phosphate de méthacrylate de propylène glycol, le phosphate d'acrylate d'éthylène glycol, le phosphate d'acrylate de propylène glycol et leurs éthoxylats ou leurs mélanges,
c) éventuellement d'au moins un monomère à insaturation éthylénique et sans fonction carboxylique, choisi dans le groupe constitué par les esters des acides acrylique ou méthacrylique, tels que les acrylates ou méthacrylates de méthyle, éthyle, butyle, 2-éthyl-hexyle, ou par l'acrylonitrile, le methacrylonitrile, l'acétate de vinyle, le styrène, le méthylstyrène, le diisobutylène, la vinylpyrrolidone, la vinylcaprolactame, ou encore les amides insaturés tels que l'acrylamide, le méthacrylamide ou leurs dérivés substitués comme le diméthylaminopropyle acrylamide ou méthacrylamide les esters acryliques ou méthacryliques de glycol, le méthacrylamido-propyl-triméthyl-ammonium-chlorure ou sulfate, le méthacrylate de triméthyl-ammonium-éthyl-chlorure ou sulfate, ainsi que leurs homologues en acrylate et en acrylamide quaternisés et/ou le diméthyldiallylammoniumchlorure,

d) d'au moins un monomère oxyalkylé à insaturation éthylénique et terminé par une chaîne hydrophobe, de formule générale (I)

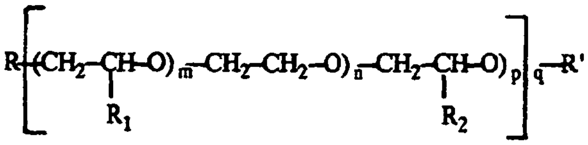

dans laquelle :

- m et représentent un nombre de motifs d'oxyde d'alkyléne inférieur ou égal à 100,
- n représente un nombre de motifs d'oxyde d'éthylène inférieur ou égal à 100,
- q un nombre au moins égal à 1 et tels que :

$$0 < q(n+m+p) \leq 100$$

$R_1$ l'hydrogène ou le radical méthyle ou éthyle,
$R_2$ l'hydrogène ou le radical méthyle ou éthyle,
R représente le radical insaturé polymérisable, appartenant au groupe des esters acrylique, méthacrylique, maléique, itaconique, crotonique, ainsi que les insaturés uréthannes tels que les acryluréthanne, méthacryluréthanne, α-α diméthyl-m-isopropenyl- benzyluréthanne, allyluréthanne,
R' représente le radical hydrophobe tel que le radical tristyrylphényle ou encore les groupes linéraircs ou ramifiés alkyle, alkylaryle, arylalkyle, ayant au moins 8 atomes de carbone ou bien des dialkyles amines ayant au moins 8 atomes de carbone lorsque R représente les insaturés uréthannes tels que les acryluréthanne, méthacryluréthanne, α-α' diméthyl-m-sopropenyl-benzyluréthanne, allyluréthanne,
ou bien R' représente le radical hydrophobe tel que le radical tristyrylphényle ou encore les groupes linéraires ou ramifiés alkyle, alkylaryle, arylalkyle, le ayant plus de 30 atomes de carbone ou bien des dialkyles amines ayant au moins 22 atomes de carbone lorsque R représente le radical insaturé polymérisable, appartenant au groupe des esters acrylique, méthacrylique, maléique, itaconique, crotonique, vinylphtalique

le total des constituants (a), (b), (c) et (d) étant égal à 100
et **en ce qu'**il a une viscosité spécifique au plus égale à 50 et préférentiellement au plus égale à 25.

**2.** Suspension aqueuse de matières minérales selon la revendication 1 **caractérisée en ce que** le copolymère est constitué :

a) de 99% à 10 % en poids d'au moins monomère a),
b) de 0% à50% d'au moins un monomère b),
c) de 0 % à 50 % en poids d'au moins un monomère c),
d) de 1 % à 90 % en poids d'au moins un monomère d),

**3.** Suspension aqueuse de matières minérales selon la revendication 2 **caractérisée en ce que** le copolymère est constitué :

a) de 97% à 50 % en poids d'au moins un monomère a),
b) de 0 % à 50 % d'au moins un monomère b),
c) de 0 % à 50 % en poids d'au moins un monomère c),

d) de 3 % à 50 % en poids d'au moins un monomère d).

4. Suspension aqueuse de matières minérales selon l'une quelconque des revendications 1 à 3 **caractérisée en ce que** le radical hydrophobe R' du monomère d) est un radical alkyle ramifié ayant 32 atomes de carbone lorsque R est un méthacrylate.

5. Suspension aqueuse de matières minérales selon l'une quelconque des revendications 1 à 3 **caractérisée en ce que** le radical hydrophobe R' du monomère d) est un radical tristyrylphényle lorsque R est un méthacrylate ou un méthacryluréthanne.

6. Suspension aqueuse de matières minérales selon l'une quelconque des revendications 1 à 5 **caractérisée en ce que** le copolymère est sous forme acide ou partiellement ou totalement neutralisé par un ou plusieurs agents de neutralisation disposant d'une fonction monovalente choisis dans le groupe constitué par les cations alcalins, en particulier le sodium, le potassium ou l'ammonium ou encore les amines primaires, secondaires ou tertiaires aliphatiques et/ou cycliques telles que la mono ou distéarylamine, les éthanolamines (mono-, di-, triéthanolamine), la mono et diéthylamine, la cyclohexylamine, la méthylcyclohexylamine et/ou par un ou plusieurs agents de neutralisation disposant d'une fonction polyvalente choisis dans le groupe constitué par les cations divalents alcalino-terreux, en particulier le magnésium et le calcium, où encore le zinc, de même que par les cations trivalents, dont en particulier l'aluminium, ou encore, par certains cations de valence plus élevée.

7. Suspension aqueuse de matières minérales selon l'une quelconque des revendications 1 à 6 **caractérisée en ce qu'**elle contient 0,05 % à 5 % en poids de la fraction séchée du copolymère par rapport à la masse sèche de la ou des substances minérales.

8. Suspension aqueuse de matières minérales selon l'une des revendications 1 à 7 **caractérisée en ce que** la ou les matières minérales sont choisies parmi les substances minérales à surface hydrophile chargée et préférentiellement choisies parmi les carbonates de calcium naturels ou synthétiques ou la dolomie ou les kaolins ou leurs mélanges et très préférentiellement parmi la craie, la calcite, ou le marbre.

9. Suspension aqueuse de matières minérales selon la revendication 8 **caractérisée en ce que** la matière minérale est un carbonate de calcium et **en ce qu'**elle possède simultanément une limite d'écoulement élevée et une viscosité Brookfield faible pour une concentration en matière sèche d'au moins 45 % et préférentiellement d'au moins 60%.

10. Suspension aqueuses de matières minérales selon l'une des revendications 1 à 7 **caractérisée en ce que** la ou les matières minérales sont choisies parmi les substances minérales à surface hydrophobe et préférentiellement choisie parmi le talc ou le mica ou leurs mélanges.

11. Suspension aqueuse de matières minérales selon la revendication 10 **caractérisée en ce que** la matière minérale est un talc ou un mica et **en ce qu'**elle possède simultanément une limite d'écoulement élevée et une viscosité Brookfield faible pour une concentration en matière sèche d'au moins 45 % et préférentiellement d'au moins 60 %.

12. Suspension aqueuse de matières minérales selon les revendications 1 à 7 **caractérisée en ce que** les matières minérales sont un mélange de matières minérales à surface hydrophile et/ou un mélange de matières minérales à surface hydrophobe et préférentiellement un mélange de talc et carbonate de calcium ou de talc et de kaolin.

13. Utilisation de la suspension aqueuse de matières minérales selon l'une quelconque des revendications 1 à 12 dans le domaine papetier.

14. Utilisation de la suspension aqueuse de matières minérales selon la revendication 13 pour la fabrication du papier.

15. Utilisation de la suspension aqueuse de matières minérales selon la revendication 13 pour la préparation de sauces de couchage.

16. Sauce de couchage, contenant outre les additifs usuels, une ou plusieurs suspensions aqueuses de matières minérales selon l'une quelconque des revendications 1 à 12.

## Claims

1. Aqueous suspension of mineral materials containing a copolymer as dispersing agent and/or grinding aid for mineral materials in aqueous suspension, **characterised in that** said copolymer is constituted by:

a) at least one ethylenically unsaturated monomer having a carboxyl function, selected from the monoacids, such as acrylic acid, methacrylic acid, crotonic acid, isocrotonic acid, cinnamic acid, the diacids, such as itaconic acid, fumaric acid, maleic acid, citraconic acid, the carboxylic acid anhydrides, such as maleic anhydride, and the semi-esters of diacids, such as the $C_1$ to $C_4$ monoesters of maleic or itaconic acid,
b) optionally at least one ethylenically unsaturated monomer having a sulfonic function, selected from acrylamido-methyl-propane-sulfonic acid, sodium methallylsulfonate, the vinylsulfonic acids and the styrenesulfonic acids, or having a phosphoric function, selected from ethylene glycol methacrylate phosphate, propylene glycol methacrylate phosphate, ethylene glycol acrylate phosphate, propylene glycol acrylate phosphate and their ethoxylates or their mixtures,
c) optionally at least one ethylenically unsaturated monomer without a carboxyl function, selected from the group constituted by the esters of acrylic or methacrylic acid, such as the acrylate or methacrylates of methyl, ethyl, butyl, 2-ethyl-hexyl, or by acrylonitrile, methacrylonitrile, vinyl acetate, styrene, methylstyrene, diisobutylene, vinylpyrrolidone, vinylcaprolactam, or the unsaturated amides such as acrylamide, methacrylamide or their substituted derivatives, such as dimethylaminopropyl acrylamide or methacrylamide, the acrylic or methacrylic esters of glycol, methacrylamido-propyltrimethyl-ammonium chloride or sulfate, trimethylammonium-ethyl chloride or sulfate methacrylate, as well as their quaternised acrylate and acrylamide homologue, and/or dimethyldiallylammonium chloride,
d) at least one ethylenically unsaturated oxyalkylated monomer terminated by a hydrophobic chain, of the general formula (I):

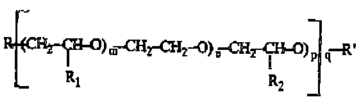

in which:

- m and p represent a number of alkylene oxide units less than or equal to 100,
- n represents a number of ethylene oxide units less than or equal to 100,
- q represents a number at least equal to 1, such that:

$$0 < q(n+m+p) \leq 100$$

$R_1$ represents hydrogen or a methyl or ethyl radical,
$R_2$ represents hydrogen or a methyl or ethyl radical,
R represents a polymerisable unsaturated radical belonging to the group of the acrylic, methacrylic, maleic, itaconic, crotonic, vinylphthalic esters as well as the unsaturated urethanes such as acrylurethane, methacrylurethane, α,α-dimethyl-m-isopropenyl-benzylurethane, allylurethane,
R' represents a hydrophobic radical such as a tristyrylphenyl radical, or linear or branched alkyl, alkylaryl, arylalkyl, aryl groups having at least 8 carbon atoms, or dialkylamines having at least 8 carbon atoms, when R represents an unsaturated urethane such as acrylurethane, methacrylurethane, α, α'-dimethyl-m-isopropenyl-benzylurethane, allylurethane,
or R' represents a hydrophobic radical such as a trislyrylphenyl radical, or linear or branched alkyl, alkylaryl, arylalkyl, aryl groups having more than 30 carbon atoms, or dialkylamines having at least 22 carbon atoms, when R represents a polymerisable unsaturated radical belonging to the group of the acrylic, methacrylic, maleic, itaconic, crotonic, vinylphthalic esters,
the sum of constituents (a), (b), (c) and (d) being 100,

and **in that** it has a specific viscosity of not more than 50 and preferably not more than 25.

2. Aqueous suspension of mineral materials according to claim 1, **characterised in that** the copolymer is constituted by:

a) from 99 wt.% to 10 wt.% of at least one monomer a),
b) from 0 % to 50 % of at least one monomer b),
c) from 0 wt.% to 50 wt.% of at least one monomer c),
d) from 1 wt.% to 90 wt.% of at least one monomer d).

**3.** Aqueous suspension of mineral materials according to claim 2, **characterised in that** the copolymer is constituted by:

a) from 97 wt.% Lo 50 wt.% of at least one monomer a),
b) from 0 % to 50 % of at least one monomer b),
c) from 0 wt.% to 50 wt.% of at least one monomer c),
d) from 3 wt.% to 50 wt.% of at least one monomer d).

**4.** Aqueous suspension of mineral materials according to any one of claims 1 to 3, **characterised in that** the hydrophobic radical R' of the monomer d) is a branched alkyl radical having 32 carbon atoms when R is a methacrylate.

**5.** Aqueous suspension of mineral materials according to any one of claims 1 to 3, **characterised in that** the hydrophobic radical R' of the monomer d) is a tristyrylphenyl radical when R is a methacrylate or methacrylurethane.

**6.** Aqueous suspension of mineral materials according to any one of claims 1 to 5, **characterised in that** the copolymer is in acid form or is partially or completely neutralised by one or more neutralising agents having a monovalent function, selected from the group constituted by the alkaline cations, in particular sodium, potassium or ammonium, or the aliphatic and/or cyclic primary, secondary or tertiary amines, such as mono- or di-stearylamine, the ethanolamines (mono-, di-, tri-ethanolamine), mono- and diethylamine, cyclohexylamine, methylcyclohexylamine, and/or by one or more neutralising agent having a polyvalent function, selected from the group constituted by the divalent alkaline earth cations, in particular magnesium and calcium, or zinc, as well as by the trivalent cations, including in particular aluminium, or by certain cations having a higher valency.

**7.** Aqueous suspension of mineral materials according to any one of claims 1 to 6, **characterised in that** it contains from 0,05 wt.% to 5 wt.% of the dried fraction of the copolymer relative to the dry weight of the mineral subsLance(s).

**8.** Aqueous suspension of mineral materials according to any one of claims 1 to 7, **characterised in that** the mineral material(s) is/are selected from the mineral substances having a charged hydrophilic surface, preferably from the natural or synthetic calcium carbonates or dolomite or the kaolins or their mixtures, very preferably from chalk, calcite or marble.

**9.** Aqueous suspension of mineral materials according to claim 8, **characterised in that** the mineral material is a calcium carbonate and **in that** it simultaneously has a high flow limit and a low Brookfield viscosity for a concentration of dry matter of at least 45 % and preferably at least 60 %.

**10.** Aqueous suspension of mineral materials according to any one of claims 1 to 7, **characterised in that** the mineral material(s) is/are selected from the mineral substances having a hydrophobic surface, preferably from talc or mica or their mixtures.

**11.** Aqueous suspension of mineral materials according to c;laim 10, **characterised in that** the mineral material is a talc or a mica and **in that** it simultaneously has a high flow limit and a low Brookfield viscosity for a concentration of dry matter of at least 45 % and preferably at least 60 %.

**12.** Aqueous suspension of mineral materials according to claims 1 to 7, **characterised in that** the mineral materials are a mixture of mineral materials having a hydrophilic surface and/or a mixture of mineral materials having a hydrophobic surface, preferably a mixture of talc and calcium carbonate or of talc and kaolin.

**13.** Use of the aqueous suspension of mineral materials according to any one of claims 1 to 12 in the papermaking field.

**14.** Use of the aqueous suspension of mineral materials according to claim 13 in the production of paper.

**15.** Use of the aqueous suspension of mineral materials according to claim 13 in the preparation of coating slips.

**16.** Coating slip containing, in addition to conventional additives, one or more aqueous suspensions of mineral materials

according to any one of claims 1 to 12.

## Patentansprüche

**1.** Wässrige Suspension aus Mineralstoffen, enthaltend ein Copolymer als Dispersionsmittel und/oder Mahlhilfsmittel für Mineralstoffe in wässriger Suspension, **dadurch gekennzeichnet, dass** das Copolymer gebildet ist aus:

a) mindestens einem ethylenisch ungesättigten Monomer mit, ausgewählt aus den Monosäuren wie Acrylsäure, Methacrylsäure, Crotonsäure, Isorrotonsäure oder Zimtsäure, den Disäuren wie der Itaconsäure, Fumarsäure, Maleinsäure oder Citraconsäure, den Anhydriden der Carbonsäuren wie dem Maleinsäureanhydrid und den Halbestern der Dicarbonsäuren wie den $C_1$- bis $C_4$-Monoestern der Malein- oder Itaconsäure,
b) gegebenenfalls mindestens einem ethylenisch ungesättigten Monomer mit einer Sulfonfunktion, ausgewählt aus Acrylamidmethylpropansulfonsäure, Natriummethallylsulfonat, den Vinylsulfonsäuren und den Styrolsulfonsäuren, oder einer Phosphorfunktion ausgewählt aus Ethylenglykolmethacrylphosphat, Propylenglykolmethacrylphosphat, Ethylenglykolacrylphosphat, Propylenglykolacrylatphosphat und ihren Ethoxylaten oder ihren Mischungen,
c) gegebenenfalls mindestens einem ethylenisch ungesättigten Monomer ohne Carboxylfunktion, ausgewählt aus der Gruppe gebildet aus den Acryl- oder Methacrylsäureestern wie z. B. den Methyl-, Ethyl-, Butyl-, 2-Ethylhexylacrylaten oder -methacrylaten oder aus Acrylnitril, Methacrylnitril, Vinylacetat, Styrol, Methylstyrol, Diisobutylen, Vinylpyrrolidon, Vinylcaprolactam oder auch den ungesättigten Amiden wie z. B. Acrylamid, Methacrylamid oder ihren substituierten Derivaten wie das Dimethylaminopropylacrylamid oder -methacrylamid, Glykolacrylester oder Glykolmethacrylester, Methacrylamidopropyltrimethylammoniumchlorid oder -sulfat, Trimethylammoniumethylchloridmethacrylat oder Trimethylammoniumethylsulfatmethacrylat sowie den quarternisierten Acrylat- und Acylamidhomologen und/oder dem Dimethyldiallylammoniumchlorid,
d) mindestens einem alkoxylierten, ethylenisch ungesättigten Monomer mit einer endständigen hydrophoben Kette der allgemeinen Formel (I):

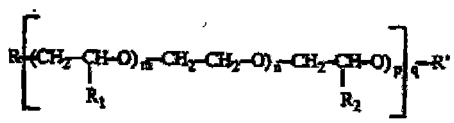

in welcher:

- m und p eine Anzahl an Alkylenoxideinheiten von 100 oder weniger darstellen,
- n eine Anzahl an Alkylenoxideinheiten von 100 oder weniger darstellt,
- q eine Zahl von mindestens gleich 1 ist und so, dass:

$$0 < q(n+m+p) \leq 100$$

$R_1$ Wasserstoff oder den Methyl- oder Ethylrest darstellt,
$R_2$ Wasserstoff oder den Methyl- oder Ethylrest darstellt,
R den ungesättigten, polymerisierbaren Rest, der zur Gruppe der Acryl-, Methacryl-, Maleinsäure-, Itaconsäure-, Crotonsäure-, Vinylphthalsäureester gehört, sowie die ungesättigten Urethane wie z. B. Acrylurethan, Methacrylurethan, α-α-Dimethyl-m-isopropenylbenzylurethan, Allylurethan darstellt,

R' den hydrophoben Rest darstellt, wie z. B. den Tristyrylphenylrest oder auch lineare oder verzweigte Alkyl-, Alkylaryl, Arylalkyl- oder Arylgruppen mit mindestens 8 Kohlenstoffatomen oder auch Aminodialkylgruppen mit mindestens 8 Kohlenstoffatomen, wenn R die ungesättigten Urethane wie z. B. Acrylurethan, Methacryluretan, α-α-Dimethyl-m-isopropenylbenzylurethan, Allylurethan darstellt,
oder R' den hydrophoben Rest bedeutet, wie z. B. den Tristyrylphenylrest oder auch lineare oder verzweigte Alkyl-, Alkylaryl, Arylalkyl- oder Arylgruppen mit mehr als 30 Kohlenstoffatomen oder auch Aminodialkylgruppen mit mindestens 22 Kohlenstoffatomen, wenn R den ungesättigten, polymerisierbaren Rest darstellt, der zu der Gruppe der

Acrylsäure-, Methacylsäure, Maleinsäure, Itaconsäure, Crotonsäure- oder Vinylphthalsäureester gehört.
wobei die Bestandteile (a), (b), (c) und (d) insgesamt 100 Teile ausmachen;
und wobei die Suspension eine spezifische Viskosität von höchstens 50 und vorzugsweise höchstens 25 aufweist.

**2.** Wässrige Suspension aus Mineralstoffen nach Anspruch 1, **dadurch gekennzeichnet, dass** das Copolymer gebildet ist aus:

a) aus 99 % bis 10 Gew.-% von mindestens einem Monomer a);
b) aus 0 bis 50 Gew.-% von mindestens einem Monomer b);
c) aus 0 % bis 50 Gew.-% von mindestens einem Monomer c);
d) aus 1 % bis 90 Gew.-% von mindestens einem Monomer d);

**3.** Wässrige Suspension aus Mineralstoffen nach Anspruch 2, **dadurch gekennzeichnet, dass** das Copolymer gebildet ist aus:

a) aus 97 % bis 50 Gew.-% von mindestens einem Monomer a);
b) aus 0 bis 50 Gew.-% von mindestens einem Monomer b);
c) aus 0 % bis 50 Gew.-% von mindestens einem Monomer c);
d) aus 3 % bis 50 Gew.-% von mindestens einem Monomer d).

**4.** Wässrige Suspension aus Mineralstoffen nach einem der Ansprüche 1 bis 3, **dadurch gekennzeichnet, dass** der hydrophobe Rest R' des Monomers d) ein verzweigter Alkylrest mit 32 Kohlenstoffatomen ist, wenn R ein Methacrylat ist.

**5.** Wässrige Suspension aus Mineralstoffen nach einem der Ansprüche 1 bis 3, **dadurch gekennzeichnet, dass** der hydrophobe Rest R' des Monomers d) ein Tristyrylphenylrest ist, wenn R ein Methacrylat oder ein Methacrylurethan ist.

**6.** Wässrige Suspension aus Mineralstoffen nach einem der Ansprüche 1 bis 5, **dadurch gekennzeichnet, dass** das Copolymer in einer sauren Form oder teilweise oder vollständig durch ein oder mehrere Neutralisationsmittel, die über eine einwertige Funktion verfügen, die aus der Gruppe gebildet aus Alkalimetallkationen, insbesondere Natrium, Kalium oder Ammonium, oder auch den primären, sekundären oder tertiären aliphatischen und/oder cyclischen Aminen wie z. B. Mono- oder Distearylamin, den Ethanolaminen (Mono-, Di-, Triethanolamin), Mono- und Diethylamin, Cyclohexylamin, Methylcyclohexylamin ausgewählt werden, und/oder durch ein oder mehrere Neutralisationsmittel, die über eine mehrwertige Funktion verfügen, die aus der Gruppe gebildet aus zweiwertigen Erdalkalimetallkationen, insbesondere Magnesium und Calcium, oder auch Zink, sowie den dreiwertigen Kationen, darunter insbesondere Aluminium, oder auch bestimmten Kationen mit höherer Wertigkeit ausgewählt werden, neutralisiert vorliegt.

**7.** Wässrige Suspension aus Mineralstoffen nach einem der Ansprüche 1 bis 6, **dadurch gekennzeichnet, dass** sie 0,05 bis 5 Gew.-% der Trockenfraktion des Copolymers bezogen auf die Trockenmasse des oder der Mineralstoffe enthält.

**8.** Wässrige Suspension aus Mineralstoffen nach einem der Anspruche 1 bis 7, **dadurch gekennzeichnet, dass** der oder die Mineralstoffe aus den Mineralstoffen mit geladener hydrophiler Oberfläche ausgewählt werden und vorzugsweise aus natürlichen oder synthetischen Calciumcarbonaten oder Dolomit oder den Kaolinen oder ihren Mischungen und insbesondere bevorzugt aus Kreide, Calcit oder Marmor ausgewählt werden.

**9.** Wässrige Suspension aus Mineralstoffen nach Anspruch 8, **dadurch gekennzeichnet, dass** der Mineralstoff ein Calciumcarbonat ist und dass die Suspension gleichzeitig eine erhöhte Fließgrenze und eine geringe Brookfield-Viskosität bei einer Konzentration an Trockenmaterie von mindestens 45 % und vorzugsweise mindestens 60 % aufweist.

**10.** Wässrige Suspension aus Mineralstoffen nach einem der Ansprüche 1 bis 7, **dadurch gekennzeichnet, dass** der oder die Mineralstoffe aus den Mineralstoffen mit hydrophober Oberfläche ausgewählt werden und vorzugsweise aus Talk oder Glimmer oder ihren Mischungen ausgewählt werden.

**11.** Wässrige Suspension aus Mineralstoffen nach Anspruch 10, **dadurch gekennzeichnet, dass** der Mineralstoff ein

Talk oder ein Glimmer ist und dass die Suspension gleichzeitig eine erhöhte Fließgrenze und eine geringe Brookfield-Viskosität bei einer Konzentration an Trockenmaterie von mindestens 45 % und vorzugsweise mindestens 60 % aufweist.

**12.** Wässrige Suspension aus Mineralstoffen nach den Ansprüche 1 bis 7, **dadurch gekennzeichnet, dass** die Mineralstoffe eine Mischung aus Mineralstoffen mit hydrophiler Oberfläche und/oder eine Mischung aus Mineralstoffen mit hydrophober Oberfläche und vorzugsweise eine Mischung aus Talk und Calciumcarbonat oder aus Talk und Kaolin sind.

**13.** Verwendung der wässrigen Suspension aus Mineralstoffen nach einem der Ansprüche 1 bis 12 auf dem Papierherstellungsgebiet.

**14.** Verwendung der wässrigen Suspension aus Mineralstoffen nach Anspruch 13 für die Herstellung von Papier.

**15.** Verwendung der wässrigen Suspension aus Mineralstoffen nach Anspruch 13 für die Herstellung von Streichmassen.

**16.** Streichmasse, enthaltend außer den üblichen Zusatzstoffen eine oder mehrere wässrige Suspensionen aus Mineralstoffen nach einem der Ansprüche 1 bis 12.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 0100947 A
- EP 0542643 A
- EP 0542644 A
- EP 0003235 A
- EP 215565 A
- FR 2303681